# EUROPEAN PATENT SPECIFICATION

(11) **EP 4 496 335 B1**
(45) Date of publication and mention of the grant of the patent: **24.12.2025**
(21) Application number: 23185791.3
(22) Date of filing: 17.07.2023
(51) Int. Cl.: H04N 25/00, H04N 25/773, H04N 25/78, H04N 25/76

(54) **IMAGE SENSOR AND METHOD OF PRODUCING AN IMAGE SENSOR**
BILDSENSOR UND VERFAHREN ZUR HERSTELLUNG EINES BILDSENSORS
CAPTEUR D'IMAGE ET PROCÉDÉ DE FABRICATION D'UN CAPTEUR D'IMAGE

(43) Date of publication of application: 22.01.2025
(73) Proprietor: Pi Imaging Technology SA, 1015 Lausanne (CH); Carl Zeiss Microscopy GmbH, 07745 Jena (DE)
(72) Inventor: ANTOLOVIC, Ivan Michel, 1015 Lausanne (CH); CARIMATTO, Augusto, 1015 Lausanne (CH)
(74) Representative: Ridderbusch, Oliver

(56) References cited:
- US-A1- 2005 062 864
- US-A1- 2012 008 007
- UNKNOWN UNKNOWN: "8b/10b encoding", 27 October 2023 (2023-10-27), XP093095787, Retrieved from the Internet <URL:https://en.wikipedia.org/wiki/8b/10b_encoding>

## Description

### FIELD OF THE DISCLOSURE

The present disclosure relates to an image sensor comprising a plurality of detector elements, such as photon-counting detector elements, and a method of producing an image sensor. More particularly, the disclosure concerns SPAD sensors (SPAD: Single-Photon Avalanche Diodes) in which the most common problems in SoC design (SoC: system on a chip) for SPAD sensors are mitigated, namely jitter, noise and/or power and ground bouncing.

### BACKGROUND OF THE DISCLOSURE

Single-Photon Avalanche Diodes (SPAD) image sensors usually have SPAD arrays connected to electronics that process the timing and intensity information of the detected photons to transmit the results to an external system. SPAD sensors are for example described in WO 2020 / 151 838 A1 and WO 2020 / 207 571 A1 as well as in US 2005/062864 A1, which shows an image sensor with the normal state-of-the-art output interface of using differential high-speed serial output signals with parallel-serial conversion and single-ended to differential conversion. US 2012/008007 A1 shows an alternative output concept to reduce noise due to switching by using gray codes.

With the fast advance of the technology, SPAD arrays have ever higher numbers of SPADs and the interconnection between the SPADs and the electronics becomes harder to implement without generating skew (i.e., a difference in the length of lines), which negatively impacts time performance. Additionally, in the case of single-ended communication between the sensor and the external system, power and ground bouncing can occur, in particular due to the asymmetry in the voltage drop of parasitic inductors in bonding wires. As a result, the timing information of said connections will be deteriorated.

In general, the external communication of a SPAD sensor is one of the parts of the overall system that consumes the most power. Input and Output cells (IO cells) use a relatively higher voltage than the core; additionally, the capacitances that the IO cells have to charge and discharge in every cycle are also much higher. Consequently, the IO banks consume considerable power. The current peaks generated during the transmission from the IO cells are supplied through inductors that, problematically, generate ground and power bouncing effects. In order to mitigate this problem, some systems use a differential approach such as LVDS (Low Voltage Differential Signaling), USB (Universal Serial Bus), and different Ethernet standards. In these communication systems, the incoming currents are compensated with the outgoing currents; thus, stabilizing the voltage and ground lines in the core of the chip. However, if for any reason (e.g., number of pins or area on silicon) the system cannot use a differential communication approach, a Single-Ended (SE) approach is chosen. In SE signaling, an electrical signal is transmitted using one wire which carries a varying (high/low) voltage that represents the signal. Another wire may be used and connected to a reference voltage, usually ground. For transmitting multiple signals in an SE system, one conductor for each signal can be used and additionally one shared ground connection or several non-shared ground connections can be provided. If the single-ended approach is used, ground and power bouncing effects remain a problem at interfaces between different voltage domains.

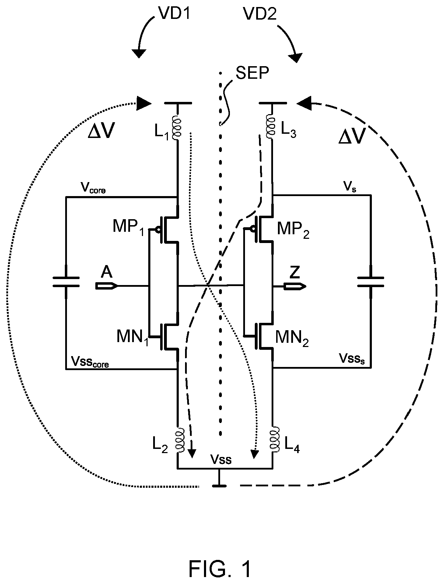

This will be further addressed with regard to FIG. 1 which shows an interface between two different voltage domains VD1 and VD2 for Single-Ended (SE) operation. A dashed line SEP represents the separation of the domains VD1 and VD2.

In Fig. 1, the voltage domain VD1 comprises a P-MOS transistor MP₁, an N-MOS transistor MN₁ and inductors L₁ and L₂. L₁ connects to the source of MP₁ whereas L₂ is connected at the source of N-MOS transistor MN₁. Similarly, voltage domain VD₂ comprises a P-MOS transistor MP₂, an N-MOS transistor MN₂ and inductors L₃ and L₄. L₂ is connected at the source of MP₃ and L₄ is connected at the source of MN₂. The drain of MP₁, the gate of MP₂, the gate of MN₂ and the drain of MN₁ are connected with each other. The drawing further indicates the voltages V_{Core} and Vs at the source of MP₁ and MP₂ respectively; the voltages Vss_{core} and Vssₛ at the source of the N-MOS transistors MN₁ and MN₂, respectively, and Vss.

When MP₁ is set on (through input A), a current pulse goes through the inductor L₁ and charges the gate capacitance of MP₂ and MN₂ to the voltage in voltage domain VD1. The current goes through L₄ and reaches ground. A similar process is started when the N-MOS transistor MN₁ of voltage domain VD1 is set on: A current pulse starts at the voltage at the voltage domain VD2, goes across L₃ and L₂ and ends at the ground connections. In both processes, the current goes through inductors between the supply and ground of different domains VD1 and VD2, and therefore generates a voltage difference between the domains VD1 and VD2 that can be large enough to become an issue.

Conventional techniques of data Single-Ended (SE) transfer will inevitably create an undesirable bouncing effect on the power and ground lines, thus disturbing the core and the interface between one part and the rest of the pad-ring. The digital communication may not deteriorate from this effect, but the analog modules do. An additional timing jitter, which cannot be subtracted or readily corrected in any way, will be generated, which negatively affects the operation of the SPAD sensor.

There is hence a need to mitigate adverse effects of voltage bouncing at SPAD sensors as well as timing jitter.

For completeness, reference is made to the following prior art documents:
[1]: "8b/10b encoding", Wikipedia, The Free Encyclopedia, 2023.
[2]: A. Carimatto et al., "Multipurpose, fully-integrated 128x128 event-driven MD-SiPM with 512 16-bit TDCs with 45 ps LSB and 20 ns gating in 40nm CMOS technology", IEEE SOLID-STATE CIRCUITS LETTERS, Vol. 1, No. 12, December 2018, doi: 10.1109/LSSC.2019.2911043.
[3]: L. H. C. Braga et al., "A Fully Digital 8x16 SiPM Array for PET Applications With Per-Pixel TDCs and Real-Time Energy Output," IEEE J. Solid-State Circuits, Vol. 49, no. 1, pp. 301-314, Jan. 2014, doi: 10.1109/JSSC.2013.2284351.
[4]: M.-J. Lee et al., "High-Performance Back-Illuminated Three-Dimensional Stacked Single-Photon Avalanche Diode Implemented in 45-nm CMOS Technology," IEEE J. Sel. Top. Quantum Electron., Vol. 24, no. 6, pp. 1-9, Nov. 2018, doi: 10.1109/JSTQE.2018.2827669.
[5]: S. Lindner, C. Zhang, I. M. Antolovic, M. Wolf, and E. Charbon, "A 252 × 144 SPAD Pixel Flash Lidar with 1728 Dual-Clock 48.8 PS TDCs, Integrated Histogramming and 14.9-to-1 Compression in 180NM CMOS Technology," in 2018 IEEE Symposium on VLSI Circuits, Jun. 2018, pp. 69-70, doi: 10.1109/VLSIC.2018.8502386.

Document [1] describes that 8-bit words are mapped on 10-bit symbols to achieve DC balance, i.e., a balanced signal strength averaged over a time interval. To this end, the difference between the counts of ones and zeros in a string of bits (a sequence of symbols) shall not exceed a predefined threshold. Furthermore, enough state changes shall be provided to allow reasonable clock recovery which is achieved by not providing more than five ones or zeros in a row.

Documents [2] to [5] describe SPAD sensors. Reducing the skew in the output tracks of the SPAD may be accomplished by OR-ing the outputs in a sectional way (document [2]) or in an H-tree fashion (document [3]). However, the result of these methods is a fixed connection of the SPAD outputs that cannot be changed at run-time. Other systems keep track on the address of the SPADs that fired, either by propagating the address of the first SPAD that fired (document [4]) or noting the codes of the SPADs that fired and dismissing the collisions (document [5]).

### SUMMARY OF THE DISCLOSURE

It is an **object** of the invention to provide a compact image sensor and a method of producing an image sensor, wherein jitter, noise and/or power and ground bouncing are reduced.

The above-defined object is achieved with an image sensor and a method as defined in the attached independent claims.

An image sensor of an embodiment of the invention includes detector elements and at least one electronic module which is connected with the detector elements and which is configured to output n-bit output words, wherein at least some of the n-bit output words include measurement data from the detector elements. The image sensor further comprises an n-bit to m-bit converter which converts each of the n-bit output words to an m-bit code, where m is larger than n (or m ≥ n +1). The n-bit to m-bit converter uses only a subset of all possible m-bit codes to encode the n-bit output words. The subset is chosen such that a difference between a number (i.e., amount) of zeros and ones of each m-bit code in the subset is on average smaller than an average difference between a number of zeros and ones of all possible n-bit output words. The image sensor further comprises an output unit (in particular for single-ended communication and) configured to output the m-bit code.

In a method of producing or designing an image sensor of an embodiment of the invention, the image sensor includes detector elements and an electronic module configured to output n-bit output words, at least some of which include measurement data from the detector elements . The image sensor is provided with an n-bit to m-bit converter which converts each of the n-bit output words to an m-bit code, where m is larger than n. The image sensor is further provided with an output unit configured for outputting the m-bit code, in particular by single-ended communication. The n-bit to m-bit converter uses only a subset of all possible m-bit codes to encode the n-bit output words, wherein the subset is chosen such that a difference between a number of zeros and ones of each m-bit code in the subset is on average smaller than an average difference between a number of zeros and ones of all possible n-bit output words.

A digital communication module can thus have single-ended outputs which are substantially balanced in terms of the number of high and low signal levels (1 and 0), at least while measurement data from the detector elements is output. Input currents and output currents of an integrated circuit which forms the image sensor are substantially equalized.

For clarity, the above-mentioned difference between a number (i.e., amount) of zeros and ones of each m-bit code shall mean that the number of ones in the m-bit code is counted and similarly the number of zeros in this code is counted, then the difference between these two numbers is built. Similarly, the average difference between zeros and ones of all possible n-bit output words can be understood such that the number of zeros and the number of ones in one n-bit output word are counted, the difference between these two numbers is calculated; such a difference is built for each possible n-bit output word, and finally the average of all these differences is calculated. The difference for the m-bit codes of the subset is on average smaller than the average difference of all n-bit output words, i.e., while in principle some differences for m-bit codes of the subset may be larger than the average difference for all n-bit output words, the average of all differences for m-bit codes of the subset is lower. More particularly, the subset may be chosen such that for all m-bit codes of the subset, the difference between the number of zeros and ones may be smaller than the average difference between zeros and ones of all possible n-bit output words. For calculating the differences, the absolute values may be used, i.e., the difference for a code including six 1s and three 0s is the same as the difference for a code including three 1s and six 0s.

Relevant effects of these features are illuminated in the following in comparison with a conventional system: Conventionally, n-bit output words of a non-inventive SPAD sensor are output via its single-ended input/output cell, wherein the full range of possible n-bit output words is used. For example, in case of n=9, all possible 9-bit output words constitute 512 different codes. The transition from one output word to the next can have up to n transitions between the number of ones and zeros in the code. For instance, the transition from the 9-bit output word 110111011 to a next 9-bit output word 010000100 has six negative changes from 1 to 0 and one positive change from 0 to 1, resulting in a sum of five negative changes. In such a case of a large number of changes between two consecutive n-bit output words, the ground and power bouncing effect is particularly pronounced and affects considerably the conventional SPAD system. In contrast, the invention reduces on average the number of changes between the sum of ones or zeros of the codes that are actually output. Ground and power bouncing effects are favourably reduced. For this purpose, the n-bit output words (which may include any possible codes and thus up to n changes between zeros and ones of two n-bit output words) are not themselves output but rather these n-bit output words are converted to m-bit codes which are then output. Not all 2^m possible m-bit codes are used. Instead only a subset with preferably an equalized number of zeros and ones of each m-bit code is used. For example, if m=11 and n=9, i.e., 11-bit codes are used to encode 9-bit output words, the subset of used 11-bit codes may be limited to 11-bit codes that include five or six ones (and thus six or five zeros). The transition from one 11-bit code to the next 11-bit code can thus have a change in the difference between ones and zeros of just minus one, zero, or plus one. This exemplary subset rules out that the summed number of changes is larger than one, and hence bouncing and noise is significantly reduced.

By using two additional bits to the original 9 bits (more generally: m minus n additional bits for n original bits), similar current compensation results to differential methods such as LVDS and USB can be achieved. This is highly advantageous since differential methods would use 18 bits for an original word size of 9 bits, instead of 11 bits as in the presented example of the invention. In some systems, such as an SoC (system on a chip) and SPAD SoC, the number of external pins can represent a considerable bottleneck. Each extra pad on the chip takes area that could be used for other functionality and an extra bonding connection is needed which can translate to larger packages or more connections on the PCB (printed circuit board), if the system uses direct bonding.

To further illuminate differences of the invention over conventional methods, reference is made to the 8/10 bit coding for serial communications described in document [1] above: This scheme was designed to provide a communication that is DC-balanced and ensures enough changes between high and low states for clock recovery. However, it does not provide any functionality when several lines are operating simultaneously / in parallel. For this type of systems, a current shall be balanced at any given instant as opposed to keeping the balance on time average (averaged over a time interval) as the 8/10 bit coding solution offers.

### Optional embodiments

Optional features of the image sensor according to the invention and of the method according to the invention are the object of the dependent claims and are explained in the following description. The detector elements may be photon-counting detector elements such as SPAD elements which, e.g., output one pulse per registered photon. In general, the detector elements may also be configured to output a signal (e.g., voltage or current) with a strength indicative of an intensity of light impinging on the respective detector element. For easier understanding, several exemplary embodiments refer to SPAD sensors or photon-counting detector elements; however, the described features may be equally used in other image sensors which use detector elements differing from photon-counting detector elements or SPADs. The image sensor may in particular be used for applications in which accurate counting of single photons and/or timing information is crucial, e.g., for microscopes, LiDAR systems (LiDAR: light detection and ranging) or PET systems (PET: position emission tomography). Exemplary embodiments may thus also comprise a light microscope or LiDAR or PET system with an image sensor formed as described herein.

The measurement data included in n-bit output words may include any (processed) data stemming from the detector elements, i.e., the raw signals output by the detector elements may be further processed, in particular by the electronic module, and the processed data is output. The measurement data may include count values indicative of numbers of photons registered with the detector elements and/or timing information on registered photons. For this purpose, the electronic module may be configured to process raw measurement signals from the detector elements to generate timing information and/or the electronic module may include at least one counter configured to count photons registered with one or more of the photon-counting detector elements.

### Output unit for single-ended communication

The output unit of the SPAD sensor may be configured for single-ended communication. It may comprise several (in particular a number of m or at least m) (input/)output cells forming a bus for outputting the m-bit code. Each cell comprises a pad which outputs one bit of the m-bit code. The individual bits of the m-bit code are thus not output one after the other, but simultaneously in parallel. In single-ended communication, a high or low level is output at a pad depending on whether a one or zero shall be output. Each pad may serve to output the information of one bit of the m-bit codes. A constant reference voltage, e.g., ground, is provided with regard to which the voltage levels at the pads are determined. A common ground may be used for all pads. Instead of pads, in general any other electrical connection elements or output terminals may be used. The output unit may be formed in a distributed manner in which its components are not directly adjacent each other. Furthermore, the output unit may also be referred to as an input/output unit which comprises one or more electrical contacts for, e.g., power supply and/or receiving information. Optionally, the same contacts, e.g., pads, may be used for outputting data and for receiving data.

The ones and zeros of an m-bit code are simultaneously output in parallel. The equalization of ones and zeros within an m-bit code has the effect that the ones and zeros that are output at the same time are equalized. At any point in time at which an m-bit code is output, the ones and zeros that are output are equalized and consequently the input and output currents at the bus are equalized.

Equalized ones and zeros may mean equal numbers of ones and zeros in an m-bit code. More generally, equalized ones and zeros may mean that a difference between the number of ones and the number of zeros is smaller than n/2 or n/3, n being the number of bits of the original n-bit output words.

### N-bit to m-bit converter

The n-bit to m-bit converter is included on a common chip of the image sensor. It receives an n-bit output word and converts this n-bit output word to an m-bit code, which is then output by the n-bit to m-bit converter to an output unit of the chip. Every n-bit word is converted to a unique m-bit code such that it is possible to convert the m-bit code back to the n-bit word without ambiguity. Only the m-bit codes but not the n-bit output words are output from the common chip of the image sensor.

The n-bit to m-bit converter may be an n-bit to m-bit conversion LUT (LUT: look-up table) which can be a hardware component included on a common chip (integrated circuit) of the image sensor / SPAD sensor. Depending on the sensor requirements, it may also be possible to implement the n-bit to m-bit converter with software, in which case the n-bit to m-bit conversion is performed with software stored on a non-transitory memory of the image sensor, and the image sensor includes a processing unit for executing the software. In the following, several embodiments are described with reference to a conversion LUT. Unless the described features refer to a hardware implementation, these embodiments may also be used for n-bit to m-bit converters that are partially or fully implemented with software.

The number of m is at least one larger than n. In particular, m may be exactly or at least two or three larger than n. For example, if m = n + 2, the number of all possible m-bit codes is four times the number of all n-bit output words to be encoded, and hence the subset of m-bit codes chosen for encoding the n-bit words may be formed by only the quarter of all possible m-bit codes which has a rather balanced or best balanced/equalized number of ones and zeros. A higher bit number is usually not necessary for reaching the intended balance, and hence unduly high bit numbers can be avoided if m exceeds n by not more than three or n/3.

In general terms, the difference of ones and zeros of one m-bit code and the difference of ones and zeros of another m-bit code shall, on average, differ less than the differences of ones and zeros of two n-bit output words. The difference of ones and zeros of one m-bit code may be understood as the number of ones of this m-bit code minus the number of zeros of this m-bit code. In one example, only m-bit codes with a difference between their numbers of ones and zeros being at most 1 are used to encode n-bit output words.

The number of m-bit codes included in the subset may be chosen to be 2^n or identical to the number of different n-bit output words.

Out of all possible m-bit codes, those 2^n different m-bit codes may be chosen for the subset which have a smallest difference in their occurrence of 1s and 0s.

Additionally or alternatively, those m-bit codes which have a highest difference between their numbers of ones and zeros are not included in the subset used for encoding the n-bit output words. In particular, the m-bit code with only ones, the m-bit code with only zeros, and all m-bit codes with only a single one or a single zero are excluded.

In a comparable embodiment, m-bit codes with only 1s or only 0s are excluded from the subset / not chosen for the subset, and additionally m-bit codes with only one 1 or only one 0 are excluded from the subset if a remaining number of m-bit codes is still ≥ 2^n (i.e., at least as large as the number of possible n-bit output words) and thus sufficient to encode all possible n-bit output words. Furthermore, all m-bit codes with only two 1s or only two 0s are excluded from the subset if a remaining number of m-bit codes is still ≥ 2^n or sufficient to encode all possible n-bit output words. This procedure is continued for a stepwise increased number of 1s or 0s in the m-bit codes. In more mathematical terms: All m-bit codes with a number of only k ones or zeros are excluded, where k starts with 0 and is incrementally increased by 1. The process terminates if a remaining group/number of m-bit codes would be insufficient to encode all possible n-bit output words; from the previous group of m-bit codes, which is equal or larger than the number of all possible n-bit output words, the subset of m-bit codes will be selected. The above-described processes can be performed as one calculation and do not need to be carried out successively. The same result as with the processes above can be achieved if the group of m-bit codes, from which the subset is selected, is formed in the opposite way: The group of m-bit codes may include all m-bit codes with the same number of zeros and ones; additionally the group may include all m-bit codes with a difference between their number of ones and their number of zeros not exceeding 1 (more generally: not exceeding L, where L starts with 1 and is incrementally increased by 1); the process stops if the group of m-bit codes is sufficiently large to encode all n-bit output words. In many cases, this balanced group of m-bit codes is larger than the number of different n-bit words and hence a subset of codes to be used need to be selected from the balanced group of m-bit codes. For example, if m=11 and n=9, the number of all m-bit codes that have exactly five or six ones exceeds the number of n-bit output words that need to be encoded. The selection of m-bit codes for the subset is important for reducing the complexity of the hardware components of the n-bit to m-bit conversion LUT, as addressed in the following.

In general, implementations of an n-bit to m-bit conversion LUT may need substantial space when formed in silicon, i.e., an LUT in which the n-bit to m-bit conversion is implemented purely through hardware components, without software performing the n-bit to m-bit conversion. A Karnaugh map indicates the intended output for each input. The Karnaugh map is solved for every input-output pair and is used for determining the hardware configuration, in particular to minimize the transistor gate usage. The selection of the subset of m-bit codes affects the complexity of the Karnaugh map and thus the number of required gates or other logic components used in the n-bit to m-bit conversion LUT. Minimizing the gate usage also translates into less area required for the n-bit to m-bit conversion LUT and less delay in the conversion process. The complexity of the Karnaugh map can be reduced if an m-bit code that is selected to encode an n-bit output word is similar to the n-bit output word. Similarity is understood in this regard as particularly few 0/1 swaps needed so that the sequence of zeros and ones of the n-bit output word is included in the m-bit code. For instance, the sequence of zeros and ones of the n-bit word 111000111 is fully included in the m-bit code 11100011100 and hence the similarly between these two elements is maximal. Selecting such pairs of an n-bit output word and an m-bit code with similar bit sequence ensures that the n-bit to m-bit mapping can be implemented with few hardware components and thus in a compact manner and without significant delay in the processing.

A mapping between the n-bit output words and the m-bit codes can be constructed / defined through at least the following processes. These processes also determine which m-bit codes are selected to form the previously described subgroup:
Process A) A group of balanced codes is provided out of all possible m-bit codes. The group of balanced codes includes at least 2^n different codes, and can be selected based on any of the above described procedures. In particular, the group of balanced codes is chosen such that an average difference between 0s and 1s of codes included in the group of balanced codes is smaller than an average difference between 0s and 1s of all possible m-bit codes and/or all possible n-bit output words.
Process B: For each of the n-bit output words, the group of balanced codes is searched for an m-bit code that includes the bit sequence of the n-bit output word. If such an m-bit code is found, the n-bit output word is mapped to this m-bit code. If such an m-bit code is not found, process C is performed:
   Process C: The group of balanced codes is searched for an m-bit code for which as few as possible 1/0 swaps are needed so that the bit sequence of this m-bit code includes the bit sequence of the n-bit output word. If an m-bit code is found in this search, the n-bit output word is mapped to this m-bit code.
Process C may start with searching the m-bit codes for an m-bit code which requires only one 1/0 swap in its sequence of ones and zeros so that the resulting sequence of ones and zeros includes identically the sequence of ones and zeros of a given n-bit output word. If the search does not yield results, the search is continued for an m-bit code that requires (only) two 1/0 swaps in its sequence to include the sequence of ones and zeros of a given n-bit output word. The search of process C may be performed until a predetermined maximum number of 1/0 swaps is reached. If no m-bit code is found in the search of process C for a given n-bit output word, then process D may be performed:
   Process D: The n-bit output word is mapped to an m-bit code which is chosen randomly or according to a predefined order out of the group of balanced codes. Process D thus provides a mapping between two elements of a low similarity.

Optionally, process D is only performed after process B has been performed for all n-bit output words and optionally after process C has been performed for all n-bit output words for which no mapping was set in process B. This has the consequence that process D does not block any m-bit codes which may be better suited for other n-bit output words. Process D is thus performed with a reduced group of balanced codes from which many codes have already been assigned through processes B and C.

Similarly, process C may optionally only be performed after process B has been performed for all n-bit output words.

An algorithm may automatically perform the above-described processes to find the best combination possible to generate the conversion LUT. The reduction of the complexity of the problem is relevant for achieving the requirements on area and delay. In principle, instead of a fixed hardware implementation of the conversion LUT, a ROM IP may in principle be used for implementing the conversion LUT. However, an ROM IP may complicate satisfying the delay requirements, and it would need more area and incur additional costs.

The above processes A to D are performed for designing or producing the image sensor. The processes A to D result in a mapping which is then built in the n-bit to m-bit conversion LUT and remains fixed. The processes A to D are thus not performed during operation of the image sensor.

An n-bit output word is preferably mapped to an m-bit code including exactly the sequence of bits of the n-bit output word. Therefore, the number of m-bit codes of the subset which include exactly the sequences of their respective n-bit output words is higher than in a theoretical case of an arbitrary mapping between the n-bit output words and the m-bit codes of the subset.

Several inventive embodiments thus reduce or minimize the difference of the number of positive and negative transitions from one output word/code to the next. A positive transition shall be understood as a change from 0 to 1 of a specific bit in the m-bit code, from one code to the next. Similarly, a negative transition indicates a change from 1 to 0 of a specific bit. A positive transition of one bit and a negative transition of another bit lead to currents cancelling out each other so that the relevant difference indicates the difference between the number of positive transitions and the number of negative transitions from one code to the next.

In more general terms, the subset of m-bit codes is chosen such that an average difference in the number of ones between two randomly drawn m-bit codes of the subset is smaller than an average difference (or smaller than 0.5 of the average difference) in the number of ones between two randomly drawn n-bit output words. Randomly drawn shall be understood such that two elements out of all possible elements are randomly selected, wherein each element has the same probability to be selected. For n-bit output words, an element is any one of all the n-bit output words, whereas for m-bit codes, an element is one of the m-bit codes of the subset. On average, the difference in the number of 1s in two m-bit codes of the subset is smaller than the difference in the number of 1s in two n-bit output words. Two consecutively output m-bit codes will therefore, on average, have a smaller difference in their numbers of 1s (or zeros) compared with the case that n-bit output words would be output consecutively. Current changes at an output interface of the image sensor chip are thus reduced.

Parity Bit: Optionally, a parity bit can be added to an m-bit code. The resulting codes have thus m+1 bits. A parity bit serves for error detection. The parity bit added to each m-bit code is either 0 or 1 such that the resulting sum of all ones in the m+1 bit code is always odd (or always even). A special choice for the parity bit can help in minimizing bouncing effects: If m is larger than n by two, then the m-bit codes used will often comprise two different numbers/counts of ones. For example, for m=11, all used m-bit codes may have either five or six ones. The parity bit may now be set to 0 for those m-bit codes of the subset which include the highest number of ones. In the example, the parity bit is thus zero if the number of ones is six. For the m-bit codes with only five ones, the parity bit is consequently one. The resulting m+1 bits will always have six ones, in contrast to the m-bit codes which have a varying number of either five or six ones. When the m+1 bit code is output, there will be no variation in the number of ones between consecutive codes, and hence power and ground bouncing effects are minimized. In addition, the parity bit serves the usual purpose to detect possible transmission errors: If the received bit sequence does not have an even number of ones, it can be concluded that there has been an error after the m+1 bit code was output by the output cells.

Irrespective of the optional provision of a parity bit, an error detection and correction becomes possible due to the circumstance that only a subset of all possible m-bit codes is used. If the external system receives an m-bit code which does not match any of the m-bit codes included in the subset, the external system judges the received m-bit code to be erroneous. Optionally, the external system checks whether there is only one possibility to change one bit of the received m-bit code such that an m-bit code included in the subset results. If this is the case, the external system makes this change to generate a corrected m-bit code. This correction is based on the assumption that only one bit (and not more than one bit) is corrupt. If there is more than one possibility how the received m-bit code might be changed to result in an m-bit code included in the subset, no unambiguous correction is possible and the received m-bit code may be discarded. The described error detection and correction procedure may be performed by software and/or dedicated hardware of the external system.

The previously described n-bit to m-bit converter (conversion LUT) can also be used in other communication systems in which the n-bit output words are not derived from detector elements or other image sensors but constitute any type of data to be transmitted in single-ended mode. Such a communication system comprises an n-bit to m-bit converter (conversion LUT) as described in this disclosure, and an output unit for single-ended communication and configured to output the m-bit code.

### SPAD sensor device

The invention also refers to a SPAD sensor device including an image sensor according to one of the described embodiments of the invention. The image sensor / SPAD sensor is formed as a system on a chip. In particular, the photon-counting detector elements, the electronic module, the n-bit to m-bit conversion LUT and the (input/)output unit can all be built on the same chip. The n-bit to m-bit conversion is performed on the chip before transmission out of the chip such that the chip outputs are balanced.

The SPAD sensor device further includes an external electronic system which is not part of said chip. The external electronic system shall receive data output from the input/output unit. To this end, the external electronic system may comprise pins electrically connected with pads of the input/output unit. The external electronic system further includes an m-bit to n-bit reverse converter which is arranged to receive m-bit codes output by the input/output unit. The m-bit to n-bit reverse converter is thus electrically connected with the input/output unit, e.g., through the mentioned connection between the pins and pads. The m-bit to n-bit reverse converter is configured to determine and output the n-bit output words from the m-bit codes. The operation of the m-bit to n-bit reverse converter is thus inverse to the operation of the n-bit to m-bit converter . The m-bit to n-bit reverse converter may perform the translation to n-bit words as an LUT purely by hardware (similar to the n-bit to m-bit conversion LUT) or a memory (RAM/ROM) that maps the balanced codes into binary codes. Alternatively, the n-bit to m-bit reverse converter may also perform the translation through software. This is possible because limitations on used area, power effects and calculation speed are less severe outside the image sensor chip.

The above described zero and one equalization mitigates the bouncing on the power and ground lines. Additionally, an inversion technique for SPAD outputs will be described in the following to reduce bouncing effects on the power and ground lines. Both methods were designed to compensate the incoming and outgoing currents so as to make the voltage drop in the inductors symmetric.

### Inversion stage for direct SPAD outputs

Some SPADs or photon counting detector elements may be connected directly to input/output (IO) cells of the chip. In particular, they may not be pre-processed in any way. These direct connections to the outputs may be provided to preserve the timing information to be processed by an external module. The described problem of power and ground bouncing may also occur if many SPADs fire at the same time. This situation is likely for moderate-to-high activity scenarios in which several or all of the SPADs are illuminated simultaneously, in particular in applications such as TCSPC (time-correlated single photon counting). In such a situation, many IO cells will suddenly change their state to 1 and this will create bouncing issues in the power and ground lines.

In particular to reduce or avoid bouncing issues in these situations, two groups of differently configured (photon-counting) detector elements may be provided: At least some of the detector elements belong to a first group of detector elements which are configured to be active-high and are (directly) connected with (input/)output cells, e.g., pads, which correspondingly change to a high state if the detector elements of the first group detect photons. Others of the detector elements belong to a second group of detector elements which are configured to be active-low and are (directly) connected with output cells which change to a low state if the detector elements of the second group detect photons. For example, each detector element of the second group may be provided with an inverter such that its output becomes active-low. In contrast, the detector elements of the first group are not provided with inverters but with buffers. Active-high shall be understood such that an output of a detector element is low if no photon is detected and becomes transitorily high upon detection of a photon. Analogously, active-low shall indicate that the output (after the inverter) is high when no photon is registered and becomes low upon detection of a photon. In very general terms, "high" and "low" may be understood such that a voltage of a high state is higher than a voltage of a low state.

In other words, outputs of some of the (photon-counting) detector elements may be inverted to be active-low, whereas outputs of other detector elements are not inverted and are active-high. At least a number of the detector elements whose outputs are active-high and a number of the detector elements whose outputs are active-low are connected to output cells without counters (or other components that convert the received signal into a digital n-bit word) being connected in-between.

The inversion stage is added for a part of the outputs in order to equalize input and output currents of the integrated circuit. In particular, the provision of the two groups lowers the bouncing effects when many SPADs are firing together as changes in current at the (input/)output cells are favorably reduced. The first and second groups may include the same number of detector elements or, more generally, their numbers of detector elements may not deviate from each other by more than 20%. In this way, if all detector elements change at the same time from a state of registering no photons to state of registering a photon, a change in current at the IO cells will be comparatively small.

The buffers and inverters can be placed in a strategic way with the objective of avoiding that particular image patterns activate a large part of the sensor array that belongs to only one of the two groups (with either buffers or inverters). For example, the detector elements that are active-high and the detector elements that are active-low may be arranged in an alternating or interleaved manner. In an alternating arrangement, always one active-high detector element may alternate with one active-low detector element within each row and/or column, or a group of active-high detector elements may alternative with a group of active-low detector elements within each row and/or column.

In a similar variant of the invention, the first and second groups are evenly mixed such that a detector element that is active-high is arranged between two detector elements that are active-low. The alternating arrangement may apply to both columns and rows of detector elements. In many scenarios, neighbouring detector elements are simultaneously illuminated and hence the alternating pattern is particularly useful in achieving a balanced number of high and low outputs at the IO cells.

Mathematically, an alternating pattern may be defined by describing the sensor array as a matrix with columns and rows, wherein the column number is denoted with i and the row number is denoted with j. A buffer is connected at every pixel that satisfies the following equation: mod(i+j,2)=0, i.e., if the sum of the column number and row number is an even number. Otherwise, an inverter is connected, i.e., if the equation mod(i+j,2)!=0 is met, i.e., if the sum of the column number and row number is an odd number.

Grouping detector elements into the first and second groups may concern all detector elements or it may only concern some detector elements which are not connected with a connection matrix and/or one or more counters. The inversion stage for one group can also be advantageously used in connection with the connection matrix and counters that output digital count values: If the connection matrix comprises a plurality of outputs that are not led to counters but are instead directly output from the chip (through e.g., pads of IO cells), the inversion stage ensures balanced currents for these direct outputs (which are separate from the counter). In contrast, the digital counter outputs may be processed by the n-bit to m-bit converter to achieve balanced currents. The inversion stage and the n-bit to m-bit converter can therefore advantageously complement each other to balance input/output currents and minimize bouncing effects.

More generally, a plurality of (photon-counting) detector elements may be connected with output cells, wherein each output cell outputs a signal when a detector element connected with this output cell registers a photon. The number of detector elements may be larger than the number of output cells. A connection matrix may be used to (flexibly) combine outputs from several detector elements to a macropixel signal forwarded to one output cell. Inverters may be arranged in some but not all of the lines to output cells, in principle anywhere between the detector elements and the output cells. As noted, the inverters generate a high signal at the respective output cell when no photon is registered, and a low signal when a photon is registered. In particular, the inverters may be arranged between the connection matrix and the output cells. This reduces the number of required inverters compared with the case of inverters arranged between the detector elements and the connection matrix. Half of all output cells (or more generally, between 30% and 70% of all output cells) may be equipped with an inverter in their line, thus being active low. This ensures better balanced output signals substantially independent of the light intensity on the sensor.

In a modification of the above embodiment, no separate inverters are used but the function of the inverters is built in the connection matrix: The connection matrix is configured to (optionally flexibly) combine signals from a number of detector elements into one signal (macropixel output) which is forwarded to one of the output cells. An inversion is achieved if the connection matrix is configured such that the macropixel output is a low signal when at least one of the number of detector elements detects a photon and outputs a high signal, whereas the macropixel output is a high signal when none of the number of detector elements detects any photon and thus each of the number of detector elements outputs a low signal. The connection matrix is configured to provide such an inversion only for output lines to some of the output cells, e.g., for 50% of the output cells or more generally for output lines to a number between 30% and 70% of all output cells. Also this design achieves that the outputs of all output cells are better balances irrespective of the intensity of light hitting the sensor.

In general, the described features of the inversion may apply to any image sensor that includes (photon-counting) detector elements, and which may include an electronic module with at least one counter configured to count photons registered with one or more of the detector elements, the electronic module configured to output n-bit output words which include count values indicative of numbers of registered photons. Optionally, the described n-bit to m-bit converter may be used for this image sensor.

### Wiggles for length and parasitic capacitance equalization

Each (photon-counting) detector element is connected to an output track (output line) which forwards an output of the respective detector element. The generally high number of SPAD elements and the interconnection between the SPAD elements and the electronics easily leads to a skew (difference in the lengths of the output tracks), which worsens the time performance. To avoid skew, at least some of the output tracks may form wiggles to increase a length of the respective output tracks. A wiggle or curl is understood as a deviation from a straight line to increase the length of the line. A wiggle may have, for example, a wave or sinusoidal shape, a zigzag (triangle) shape or a square shape (i.e., four right angle bends are introduced into a straight line). Each wiggle may contribute the same extra length to the respective output track, however, in general it is also possible to use wiggles with different size. A number of wiggles per output track is chosen such that all output tracks have a common length.

For generating the layout of SPAD sensor, an equalization algorithm may be provided which automatically calculates the number of wiggles (or summed length of all wiggles) that shall be provided per output track such that all output tracks have the same length. The equalization algorithm considers the geometry of the space available for the output tracks and wiggles, i.e., the space between the SPAD elements and a connection matrix or monostables which are described in more detail later. The wiggles can be provided in a spread or evenly distributed way, thus randomizing the line crosses. This equalizes the parasitics and crosstalk.

Ground shield lines may be arranged between the output tracks of the detector elements to reduce a coupling effect between the output tracks. The ground shield lines and output tracks may in particular alternate such that one ground shield line is always between two neighbouring output tracks.

Wiggles may also be added to digital communication lines, e.g., through which n-bit output words and/or m-bit codes are transmitted. The lengths of lines for transmitting the individual bits of an n-bit output word are thus made equal. Similarly, through added wiggles all lines for transmitting the individual bits of an m-bit code have the same length.

The described wiggles may in general be provided at output tracks of detector elements of any image sensor, in particular the image sensor described above which includes the n-bit to m-bit converter and/or the inversion stage for direct SPAD outputs.

### Connection matrix

The electronic module may include a connection matrix configured to flexibly combine the outputs of any of the (photon-counting) detector elements into one or more combined signals, thus grouping the detector elements to macro-pixels. Reconfigurable macro-pixels are formed in that every pixel (photon-counting detector element) of the SPAD array is connected in a reconfigurable scheme with other SPADs. The connection matrix may include an OR matrix in which a signal is output if anyone of several inputs of a logical OR unit receives a signal. The connection matrix may also include other logical units than OR connections to combine several inputs.

The connection matrix can be configured to flexibly change which outputs are combined at run-time, e.g., using an internal memory. Any arbitrary combination of outputs is possible, to which end the connection matrix may be equipped with SRAM memories and/or LUTs. The connection matrix can be flexibly varied to change the number of macro-pixels, and furthermore the number of detector elements to be combined into one macro-pixel can be flexibly set. The outputs of the macro-pixels may be connected to outputs of an integrated circuit of the image sensor or may be further processed before being output from the image sensor. The connection matrix can also bet set such that the outputs of some detector elements are just forwarded, without being combined with outputs of other detector elements.

The connections of the connection matrix require a high number of lines due to the fully-connected capability of the system. Any difference in length of these lines would create time skew among the SPADs. In particular because the size of the SPAD array is not negligible in terms of distance, there is, without further measures, an inherit skew in the length of these lines that translates into time skew. When the connection matrix combines outputs of a plurality of detector elements, the information from which detector element an output stems (i.e., the address of the firing SPAD element) is lost. Consequently, any skew in the output tracks cannot be corrected after the connection matrix. Uncorrected skew leads to time jitter which deteriorates the overall time precision. The wiggles for avoiding skew are thus added between the detector elements and the connection matrix.

Optionally, a monostable circuit may be provided between the photon-counting detector elements and the connection matrix. In this case, each output tracks of the photon-counting detector elements leads to a monostable and from there to the connection matrix. The monostable serves for reducing the pulse duration of a pulsed signal, e.g., the time length of a high state following the registration of a photon by a SPAD element. Each monostable thus outputs shortened fixed-length pulses. This is advantageous when the outputs of several SPAD elements are combined by the connection matrix as the signals/outputs need to be timely separated in order to form distinguishable signals in a combined output of the connection matrix. The wiggles may be added between the photon counting detector elements and the monostable circuit so that the lengths of the lines up to the monostables are made equal. Alternatively, wiggles may be provided after the monostable and optionally also before the monostable so as to equalize the line length from the photon counting detector elements to the connection matrix.

### General features

The described detector elements may be photon-counting detector elements and may form at least one array (sensor array). A pixel shall be understood as one element of the sensor or sensor array, i.e., one detector element.

For easier understanding, several embodiments are described with reference to a particular bit number of n-bit output words and m-bit codes. However, indicated exemplary bit numbers only serve to facilitate understanding and the described features shall be more generally understood to apply to any n-bit output word and m-bit code, wherein m is larger than n, in particular larger by (at least) two. In general, n may be any positive (whole) number, and m may be any positive (whole) number that is larger than n. In particular, m may be between 1.1*n and 1.5*n (but at least ≥ n+1). Compared with differential communication methods for transmitting n-bit words, the single-ended communication with m-bit codes is more efficient as long as m<2*n.

The subset of m-bit codes shall be understood such that only some of all possible m-bit codes can be outputs of the n-bit to m-bit converter . "All possible m-bit codes" shall comprise all codes with m bits, irrespective of their sequence of 1s and 0s.

In general, the n-bit to m-bit converter converts any n-bit output word, wherein all or some of these n-bit output words may indicate count values of photons. However, the conversion to an m-bit code can concern any digital data and is not limited to photon count values. For example, other information included in an n-bit output word to be converted to an m-bit code which is then output from the chip may indicate settings of the connection matrix or may include timing information, status information on components of the chip, control commands or warnings / error messages generated by components of the chip.

For at least some of the n-bit output words, one n-bit output word may correspond to one count value. However, it is also possible that one n-bit output word includes more or less information than one count value. For example, a count value may be 10 bit, wherein an n-bit output word has only n = 5 bits; in this case each 10-bit count value may be split into two n-bit output words which are then forwarded to the n-bit to m-bit converter consecutively, and thus two m-bit codes are consecutively output from the chip. In this case, the frequency of outputting m-bit codes may be at least twice the frequency with which 10-bit count values are generated. In principle, n can be any number that does not need to be connected to the number of bits of count values. For example, if the count values have 10 bits, it is also possible that the n-bit output words have n = 8 bits, in which case some n-bit output words include bits from different 10-bit count values. Still further, it is possible that an n-bit output word includes more than one count number (in particular if n is larger than the number of bits of count values output by the counters) or that an n-bit output word includes at least one count number and other information, such as information on settings of electronic components of the chip.

The electronic module of the image sensor comprises one or more electronic units which are built on the same chip as the detector elements. The electronic module may in particular include at least one connection matrix and/or analog and digital modules for time-resolved detection or photon counting. The feature according to which the electronic module outputs n-bit output words may be understood such that the n-bit output words are output to other components of the electronic module.

The intended use of the described image sensor and the SPAD sensor device results in variants of methods of the invention. Similarly, features described with regard to the inventive method may also apply to the image sensor of the invention and may in particular define how the n-bit to m-bit converter is built.

### BRIEF DESCRIPTION OF THE DRAWINGS

A better understanding of the invention and various other features and advantages of the present invention will become readily apparent by the following description in connection with the schematic drawings, which are shown by way of example only, and not limitation, wherein like reference numerals may refer to alike or substantially alike components:
- Fig. 1: shows schematically an interface between two voltage domains for single-ended communication used in the chips of image sensors of some exemplary embodiments of the invention;
- Fig. 2: shows schematically an image sensor of an exemplary embodiment of the invention;
- Fig. 3: shows schematically an image sensor and external components according to exemplary embodiments of the invention;
- Fig. 4: shows histograms of the numbers of ones in codes for illustrating signal imbalances at the output of chips of image sensors;
- Fig. 5: shows codes generated with image sensors of exemplary embodiments of the invention to encode original digital data; these codes shall be transmitted at the output of the chip in place of the original digital data;
- Fig. 6: shows histograms of the number of net transitions between ones and zeros from one code to another code, wherein the depicted histograms concern two different groups of codes/words;
- Fig. 7: shows schematically an n-bit to m-bit conversion LUT of embodiments of the image sensor of the invention;
- Fig. 8: shows schematically components of an image sensor of embodiments of the invention;
- Fig. 9: shows schematically components of an image sensor of embodiments of the invention;
- Fig. 10: shows a graph illustrating the summed current at an output of a chip of an image sensor of embodiments of the invention;
- Fig. 11: shows output tracks of a sensor array of an image sensor of embodiments of the invention;
- Fig. 12: shows a detail of the output tracks of FIG. 11;
- Fig. 13: shows schematically a detail of the output tracks of FIG. 11.

### DETAILED DESCRIPTION OF EMBODIMENTS

### FIG. 2

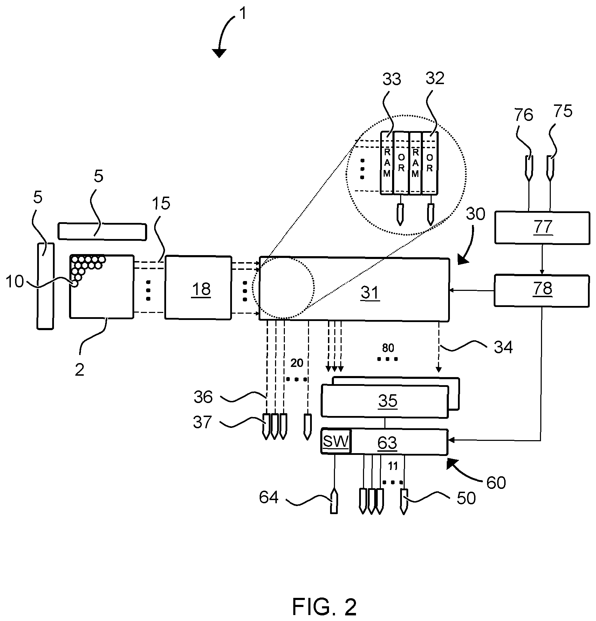

FIG. 2 shows schematically components of an exemplary image sensor 1 of the invention. The image sensor 1 may be a SPAD sensor and may be formed as a system on a chip (SoC). All components described with regard to FIG. 2 may hence be arranged on the same chip. The image sensor 1 comprises a SPAD array or sensor array 2 of (photon-counting) detector elements 10 which may be SPADs. The sensor array 2 is equipped with masking registers 5. Each photon-counting detector element 10 is connected with an output track (output line) 15. When one of the photon-counting detector elements 10 registers an impinging photon, a signal is output via its output track 15. The output tracks 15 lead to a monostable unit 18 with a plurality of monostables which serve for shortening signal pulses travelling through the output tracks 15. From the monostables, the output tracks 15 continue to a connection matrix 31 of an electronic module 30. The connection matrix 31 allows to flexibly combine the signals from different output tracks 15 and thus from different SPADs. For this purpose, the connection matrix 31 includes a matrix of (e.g., logical OR) connections 32 and associated RAM or other memory 33. The output tracks 15 of several or all SPADs may be connected to one (OR) connection 32, wherein the memory 33 allows to flexibly set from which of the connected output tracks 15 signals shall be forwarded via the OR connection. Each of the OR connections 32 thus outputs via a respective output line 34 a combined signal which is the sum of the signals of the output tracks 15 for which the memory 33 indicates that the respective signals shall be forwarded. In a signal which is output through one of the output lines 34, the information from which of the combined SPADs a pulse (registered photon) stems, is lost.

The electronic module 30 also includes a counter 35, which in the depicted example is formed by two banks of counter elements. At least some of the output lines 34 (in the depicted example: eighty output lines 34) of the connection matrix 31 lead to the counter 35. The counter 35 counts the number of pulses (registered photons) per output line 34 and outputs a count number. The count number indicates the number of photons registered with the selected number of photon-counting detector elements within a specified time interval. At this point, the information when exactly a photon-counting detector element fired is not preserved.

In FIG. 2, timing-aware lines/tracks are drawn with dashed lines, whereas solid lines indicate digital lines in which the exact timing information of a SPAD firing is not preserved. As can be seen, the timing information is lost at the counter 35. The digital output of the counter 35 may form an n-bit output word. As described in greater detail later, the n-bit output word is converted to an m-bit code 50 which is output through a read-out system 63 of an output unit 60, also referred to as input/output unit or IO unit. A frame 64 may be input to a software component SW.

The connection matrix 31 may be provided with further output lines 36 which do not lead to any counter but instead directly to outputs of the chip; these output lines 36 serve for timing outputs 37. In the depicted example, twenty output lines 36 are provided. The timing information can then be processed by an external module which is not arranged on the chip.

FIG. 2 further shows that a clock signal 75 and other serial input data 76 may be input through a digital interface 77 to registers 78, and can be further used to set the connection matrix 31 and/or to control the output unit 60.

The read-out system 63 is configured for single-ended digital communication and comprises several parallel outputs (in the depicted example: 11) for outputting an 11-bit string. Without further measures, outputting information at the read-out system 63 would lead to significant power and ground bouncing as described earlier. To avoid these issues, count values from counter 35 are not directly output. Instead, the count values are mapped onto a code which is output through the read-out system. This code is specially designed to reduce or avoid power and ground bouncing, as will be explained with regard to the following figures.

### FIG. 3

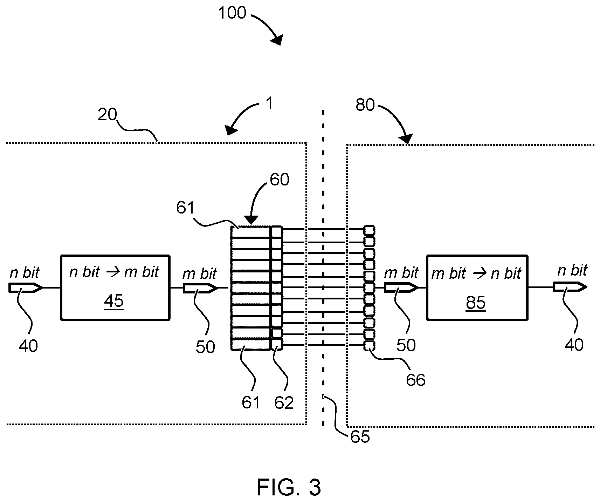

FIG. 3 shows schematically components of an exemplary image sensor 1 of the invention which is built as a system on a chip 20. FIG. 3 shows an external (electronic) system 80 to which the chip 20 is connected. The image sensor 1 and the external system 80 together form an exemplary SPAD sensor device 100 of the invention.

The image sensor 1 comprises an n-bit to m-bit converter 45 which receives an n-bit word. The n-bit word may be an output from the counter 35 / the electronic module 30 shown in FIG. 1 and is thus referred to as an n-bit output word 40. The n-bit to m-bit converter 45 converts each n-bit output word 40 into an m-bit code 50. The m-bit code 50 is output to the output unit 60. The output unit 60 includes a number of at least m output cells 61 with respective pads 62. Each bit of the m-bit code 50 is output through one of the pads 62. A parallel single-ended communication through an interface 65 between chip 20 and external system 80 is thus realized. The interface 65 may comprise further electrical contacts not shown in the schematic drawing. The external system 80 is connected to the pads 62 through pins 66 to receive the m-bit code 50. The m-bit code 50 is supplied to an m-bit to n-bit reverse converter 85 which converts the m-bit code 50 back into the n-bit word 40.

If all possible m-bit codes 50 were used (i.e., all codes from 00...000 to 11...111), a voltage change at each of the pads 62 may occur simultaneously, which leads to considerable unbalanced electrical currents, causing power and ground bouncing. This is avoided in that the n-bit to m-bit converter 45 generates balanced codes in which the numbers of ones and zeros is well balanced. The transition from one m-bit code to the next will not significantly alter the overall number of high and low outputs at the pads 62. The interface 65 thus constitutes a balanced physical interface.

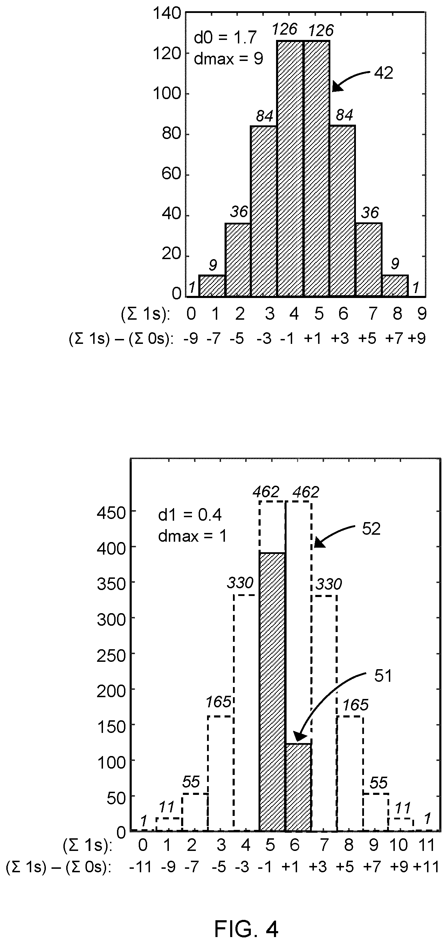

The mapping according to which the n-bit to m-bit converter 45 maps each possible n-bit output word 40 to a unique and balanced m-bit code 50 will be further explained with regard to FIG. 4.

### FIG. 4

FIG. 4 shows in its upper portion a histogram 42 for all possible n-bit output words 40 as produced by standard counters. The histogram shows how many n-bit output words 40 exist per number of 1s included in the n-bit output words 40. In this example, n is 9 and hence the number of all possible n-bit output words is 2^9=512. The horizontal axis indicates the number of ones within one n-bit output word. The number of 1s included in 9-bit output words is between zero (for the 9-bit output word 000000000) and nine (for the 9-bit output word 111111111). As indicated, 1 code/possibility exists for 9-bit output words with zero 1s, 9 different codes exist for 9-bit output words with one 1, 36 codes exist for 9-bit output words with two 1s, and so forth.

In place of the number of 1s, also the difference between the number of 1s and the number of 0s can be indicated, abbreviated in FIG. 4 as "(Σ 1s) - (Σ 0s)". A 9-bit code with zero 1s has consequently a difference of -9. For a 9-bit code with four ones (and thus five zeros) the difference is 4-5=-1.

If these n-bit output words 40 were output at pads 62 of output cells, input and output currents would be highly unbalanced and there would be large changes between the number of 1s of consecutive n-bit output words. For example, if a 9-bit output word with three 1s were output followed by a 9-bit output word with seven 1s, the sum of voltages / high outputs at the single-ended communication lines (pads) increased by four, i.e., the voltage is changed to high at four more pads compared with any pads at which the output voltage may be reduced to low or ground, for outputting the next 9-bit output word. This leads to substantial unbalanced currents at the output interface.

FIG. 4 shows in its lower part a histogram 52 (dashed lines) of all possible m-bit codes, wherein m is 11. The histogram 52 is similar in shape to the histogram 42, with the difference that the number of 1s goes from zero to eleven, and the overall number of possible codes is 2^11=2048. FIG. 4 also shows a subset 51 (solid lines and crosshatched) within all possible m-bit codes.

The n-bit to m-bit converter 45 does not use all of the possible m-bit codes forming the histogram 52 but only the m-bit codes included in the subset 51. In other words, only the m-bit codes of the subset 51 can be output by the n-bit to m-bit converter 45. The number of codes included in the subset 51 can be equal to the number of n-bit words. In the case of n=9, the subset 51 may thus consist of 2^9=512 codes. Most of the 2048 11-bit codes are thus not used by the n-bit to m-bit converter 45. In principle the number of codes of the subset 51 may exceed the number of n-bit words if also other information shall be output.

The m-bit codes to be included in the subset 51 are chosen to provide balanced codes in which the difference between the numbers of 1s and 0s in each code (Σ1s - Σ0s) is minimal. In the case of m=11 (or more generally if m is an odd number), the m-bit codes in which the numbers of 1s and 0s differ only by +1/-1 are the best-balanced codes. If the number of all possible of these best-balanced codes exceeds the number of n-bit output words (as is the case for the depicted example of n=9 and m=11), then the subset 51 includes only best-balanced m-bit codes in which the numbers of 1s and 0s differ only by +1/-1. (Otherwise the subset also includes m-bit codes of the next best balanced group of m-bit codes in which the number of 1s and 0s differs by +2 and/or - 2).

The choice of the subset 51 also reduces a change in the difference between 1s and 0s from one 11-bit code to another 11-bit code. The depicted subset 51 only uses codes with five 1s (and thus six 0s) or six 1s (and thus five 0s). From one 11-bit code to the next, the total number of 1s in the 11-bit code thus changes at most by +/- 1. As a consequence, at the pads 62 / the interface 65, there will be in sum only a change of max. one signal that changes between high and low. The power and ground bouncing effect is thus effectively reduced.

In the example shown, m-bit codes with two different numbers of 1s must be used so that sufficiently many m-bit codes are available to encode all n-bit words. (As indicated, using only 11-bit codes which all have the same number of 1s, e.g., five 1s, would only provide 462 different codes which is insufficient to encode all 512 different 9-bit output words). In principle, it would be possible to select 256 11-bit codes with five ones and the same number of 11-bit codes with six 1s to encode all 9-bit output words. In contrast, the depicted example uses a subset 51 with asymmetric numbers of m-bit codes with five 1s and six 1s. The number of m-bit codes with five 1s is more than double as high as the number of m-bit codes with six 1s included in the subset 51. This has the consequence that in more cases there will be no change at all in the number of ones from one transmitted m-bit code to the next transmitted m-bit code, thus minimizing power and ground bouncing.

FIG. 4 indicates the maximum number dmax of a change in the number of 1s from one code/word to the next. For the 9-bit words, dmax is 9 (corresponding to the case that the 9-bit word 000000000 is followed by 111111111). In the case of the subset 51, dmax is 1 as there can be no larger change than from an 11-bit code with five 1s to an 11-bit code with six 1s, or vice versa.

Furthermore, FIG. 4 indicates the average difference d0, d1 in the number of 1s from any one word to the next. For all 9-bit output words taken together, the average difference d0 is 1.7. For the subset 51 of the 11-bit codes, the average difference d1 is shy of 0.4.

In more general words, the subset 51 is chosen such that the average difference d1 in the number of 1s between two (randomly drawn) codes of the subset 51 is smaller than the average difference d0 in the number of 1s between two of the n-bit output words. For a particularly efficient suppression of power and ground bouncing effects, the subset may be chosen such that d1 < 0.5 d0. Furthermore, the subset 51 is chosen such that dmax for the subset is at most n/3 as large as dmax for the distribution of all n-bit output words.

In addition to the selection of m-bit codes 50 to be included in the subset 51, also the mapping from the n-bit output words 40 to m-bit codes 50 is relevant. The specific mapping determines the complexity for converting an n-bit output word 40 to an m-bit code 50. The higher the complexity, the higher the number of electronic components and / or space needed for the n-bit to m-bit converter 45.

The n-bit to m-bit converter 45 may be formed as an n-bit to m-bit conversion LUT (LUT: look-up table) built purely in hardware, using a number of logical components to process any input n-bit word to output a specific m-bit code.

The implementation of conversion LUTs usually takes massive area when it is converted into silicon. This is due to the process of the LUT synthesis where the Karnaugh map has to be solved for every input-output pair. The result is a Cartesian product of the number of inputs and the number of outputs. In contrast, an algorithm will be presented below which has been especially designed to generate the conversion and which is complexity-aware. It links inputs and outputs so as to achieve the most straight-forward relation; thus, minimizing the Karnaugh map and the gate usage, which translates into less area and delay. In other words, the Karnaugh map of the conversion LUT is reduced by finding the combinations between binary codes (n-bit words) and balanced codes that produce the smallest number of gates when it is translated into a gate-level circuit. Otherwise, both the area and the delay of the conversion LUT might be too large to become a practical solution.

A favorable mapping between n-bit output words and m-bit codes may be generated as follows, wherein xi indicates an n-bit output word and yi indicates an m-bit code:
- Generate a group Y of balanced codes yi. The group Y includes at least 2^n elements. "Balanced codes" shall be understood as codes in which the number of 1s and 0s is balanced, i.e., preferably equal numbers of 1s and 0s, and if this is not possible (if m is an odd number), the difference in the numbers of 1s and 0s within each code shall be as small as possible. In the example above of m=11, the group may comprise all 924 codes with five or six 1s. In general, the values of n and m determine which maximum difference in the numbers of 1s and 0s is needed such that the amount of codes for the group reaches at least 2^n codes. Then, all codes which meet the maximum difference requirement are included in the group; in the example above, these are all 462 codes with five 1s and all 462 codes with six 1s.
- Process A) Take an element xi and search for a code yi within group Y such that the bit sequence of element xi is contained in code yi. For example, if xi=110011001, then a code yi is searched which also includes the sequence 110011001; additionally yi will include an amount of m minus n further bits. If such a code yi is found, it is assigned to xi.
- Process B) If the above search fails, the group Y is searched for a code yi that requires as few as possible 0/1 swaps to identically include the bit sequence of xi. For example, the bit sequence xi=111011101 is not included in the group Y of balanced codes yi. However, the group Y may include one or more codes yi (e.g. 11101110000) in which only one 1-0 change (or vice versa) is needed such that the sequence 111011101 would be included in the sequence of bits of the code yi. If such a code yi is found, it is assigned to xi. A stop criterion such as a maximum number of 0/1 swaps may be defined for this process.
- Process C) If the above search with 0/1 swaps fails, a random code yi out of the balanced group Y may be assigned to xi. Alternatively, a code yi of the balanced group Y may be selected according to other criteria, e.g., according to a predefined order or such that the amount of selected codes yi with the same number of ones is maximized (in the case of the subset 51 in FIG. 4, this means selecting codes with five ones and not six ones, which reduces d1 as explained above).

The above processes are carried out for each xi (i.e., for all possible n-bit output words). The processes may be performed first for one of the xi, then for the next xi, and so forth. Alternatively, at first only process A may be performed for all xi. Then process B is performed for all xi for which no yi was assigned in process A. Then process C is performed for all xi for which no yi was assigned in process A or B. This has the effect that no code yi is assigned through process C which could be better suited for another xi (in process A or B).

In a variation of the above processes, the processes A and/or B determine candidate codes yi which are equally suited to be assigned to a specific xi. For example, the bit sequence xi=110011001 is included in each of the codes yi: 11001100100, 11001100101, 11001100110, 00110011001, 01110011001, 10110011001, 01100110010, 01100110011 and 11100110010. Several or all of these balanced codes yi may be regarded as candidate codes. Candidate codes are determined for several or all codes xi. From the candidate codes, the codes yi to be assigned to the codes yi are selected such that it is avoided (or the occurrence reduced) that all candidate codes for one xi are assigned to other codes xi such that no suitable candidate code remains for the one xi. In one example, the selection of a code yi out of the candidate codes begins for those xi for which the smallest groups of candidate codes were determined (in process A and/or B). In this way, the probability is higher that one of several candidate codes yi can actually be assigned to every xi.

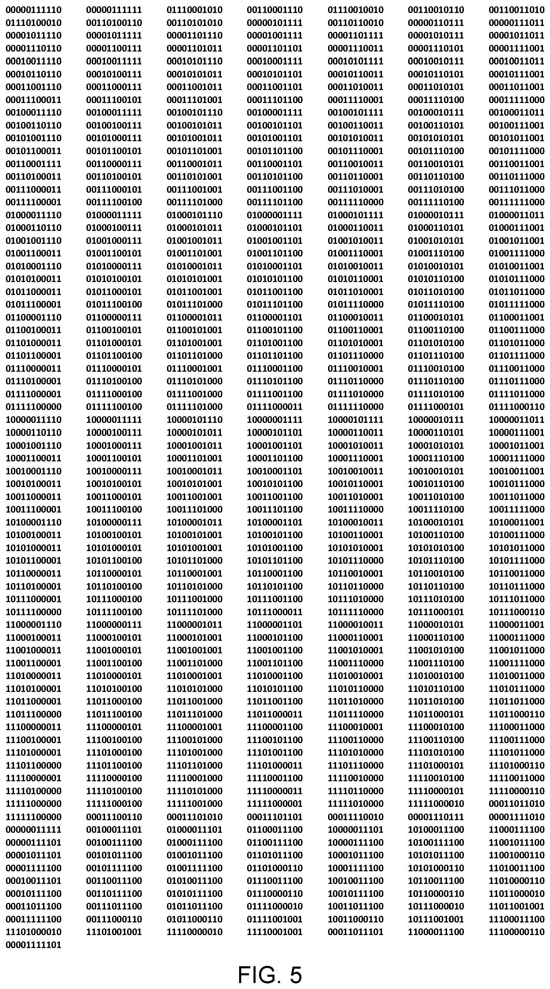

With the above processes, a table of m-bit codes can be built as shown in FIG. 5.

### FIGS. 5 and 6

FIG. 5 shows a table of all 512 m-bit codes (with m=11) that are used to encode the 512 n-bit output words (with n=9) from the example depicted in FIG. 4. The codes are generated according to processes described with regard to FIG. 4.

The 512 codes have a maximum difference of one in their numbers of 1s, i.e., all 512 codes have either five 1s or six 1s.

This table of converted codes enables the system to balance the number of transitions from 0 to 1 and from 1 to 0 when transmitting a sequence of words. Ideally, if the total input and output currents are fully compensated, the number of transitions are fully evened out and the sum of currents is equal to 0.

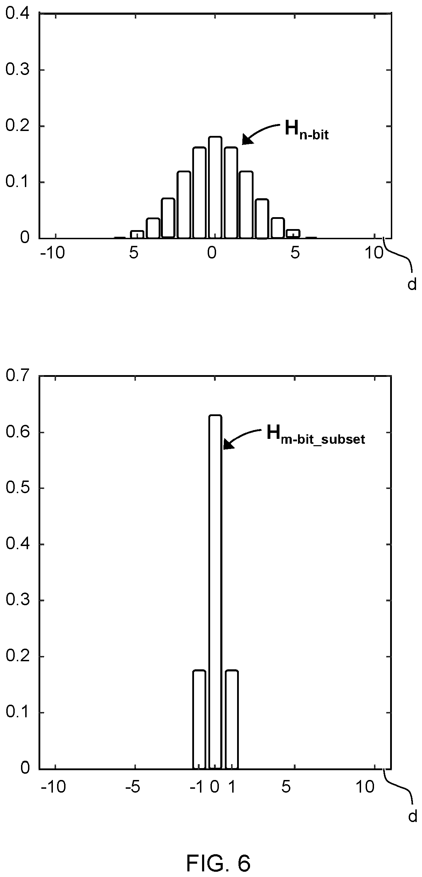

FIG. 6 shows in its upper part a histogram H_{n-bit} of the transitions for a 9-bit regular counter or a Linear Shift Feedback Register (LSFR) counter. The horizontal axis indicates the difference d which is the number of 0-1 transitions minus the number of 1-0 transitions between two consecutive codes (here: between two consecutive 9-bit output words).

The lower part of FIG. 6 shows a histogram H_{m-bit_subset} of the transitions for the 11-bit codes of the subset used to encode all 9-bit output words. The horizontal axis again indicates the difference d which is the number of zero-to-one transitions minus the number of one-to-zero transitions between two consecutive codes (here: between two consecutive 11-bit codes of the subset). The vertical axis indicates the frequency of occurrence (normalized to 1). As shown, the difference d is zero in 64% of all possible transitions, and d is -1 or +1 in the remaining 36% of all cases. This means that the current at the output interface of the chip is perfectly balanced for 64% of the time and it is not balanced by only 1 unit of current (positive or negative) for 36% of the time.

The asymmetry between input and output currents can be measured with the standard deviation STD of the distributions H_{n-bit} and H_{m-bit_subset}. For regular counters (H_{n-bit}), the standard deviation STD is 3.5. In contrast, the standard deviation STD for H_{m-bit_subset} is 0.61 in this exemplary implementation of the invention. This quantifies the extreme improvement in minimizing undesired effects such as power and ground bouncing associated with current changes at the output interface of the chip.

### FIG. 7

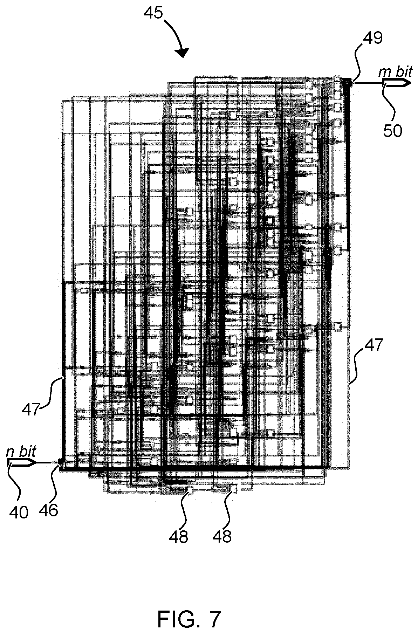

An exemplary implementation of an n-bit to m-bit converter 45 formed by an n-bit to m-bit conversion LUT (for n=9 and m=11 as described above) is schematically shown in FIG. 7.

The LUT (n-bit to m-bit converter 45) comprises an input 46 at which an n-bit output word 40 is input. The LUT translates the n-bit output word 40 into an m-bit code 50 which is output at an output 49 of the LUT. The LUT comprises a plurality of electrical lines 47 and logical units 48 such as AND or OR units which process the received n-bit output word 40 to form the m-bit code 50. A mapping between n-bit output words 40 and m-bit codes 50 is fixed and defined through the configuration of the electrical lines 47 and logical units 48. The LUT is purely realized through electronic hardware components, i.e., a mapping and transformation from an n-bit output word 40 to an m-bit code 50 is defined by the hardware, and the LUT does not include any software processes to transform n-bit output words 40 to m-bit codes 50.

The previously described procedure in generating the mapping between n-bit output words 40 to m-bit codes 50, wherein a bit sequence of an n-bit output word is preferably included in the m-bit codes of the balanced subset, is important for minimizing the complexity of the LUT. In the depicted example of FIG. 7, the final area of the circuit of the LUT / n-bit to m-bit converter 45 is merely 60 x 60 µm² when built in 180nm technology. Furthermore, any time delay due to the code transformation is particularly low.

### FIG. 8

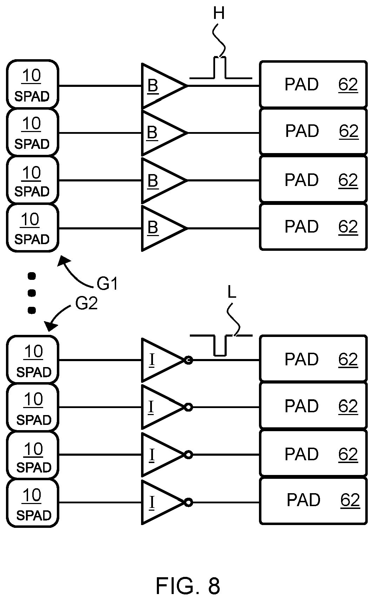

FIG. 8 shows schematically components of an exemplary image sensor which may be formed as described with regard to any of the preceding figures. FIG. 8 depicts some photon-counting detector elements 10 which are directly connected to pads 62 for outputting signals from these photon-counting detector elements 10. The direct connections are in particular used for timing information about firing photon-counting detector elements 10. Direct connections are understood such that signals from the depicted photon-counting detector elements 10 are not led to a counter or other electronic components which translate the signal into a more complex digital code or otherwise process the signal such that timing information would not be preserved.

If (without further measures) several of the photon-counting detector elements 10 simultaneously register a photon, the output signals at the pads 62 would all simultaneously change to a high voltage, which leads to significant currents and bouncing as the incoming and outgoing currents are not symmetrical. Moreover, this effect will depend on the activity of the sensor. To overcome this issue, the photon-counting detector elements 10 are grouped into a first group G1 and a second group G2. The photon-counting detector elements 10 of the first group G1 are configured to be active-high H, meaning their output signal is only high upon registration of a photon. In contrast, the photon-counting detector elements 10 of the second group G2 are configured to be active-low L such that their outputs are high as long as no photon is registered and becomes low when a photon is detected. For this purpose, outputs of the photon-counting detector elements 10 of the second group G2 may be inverted, e.g., with inverters I as depicted. The photon-counting detector elements 10 of the first group G1 do not comprise inverters but instead buffers B.

In the depicted example, both groups G1 and G2 comprise the same number of photon-counting detector elements 10. More generally, the numbers may not deviate from each other by more than 20%. If all of these photon photon-counting detector elements 10 fire at the same time, there will be about the same number of high and low signals output at the pads 20, similar to the case that no photons are registered. Consequently, an intensity change of impinging light does hardly change the overall current at the outputs and thus power and ground bouncing is minimized.

The compensating effects of the first and second groups G1 and G2 should preferably be achieved irrespective of any light intensity distribution on the sensor array. A preferred pattern how the photon-counting detector elements 10 are assigned to the first or second group G1, G2 will be described with regard to the following figure.

### FIG. 9

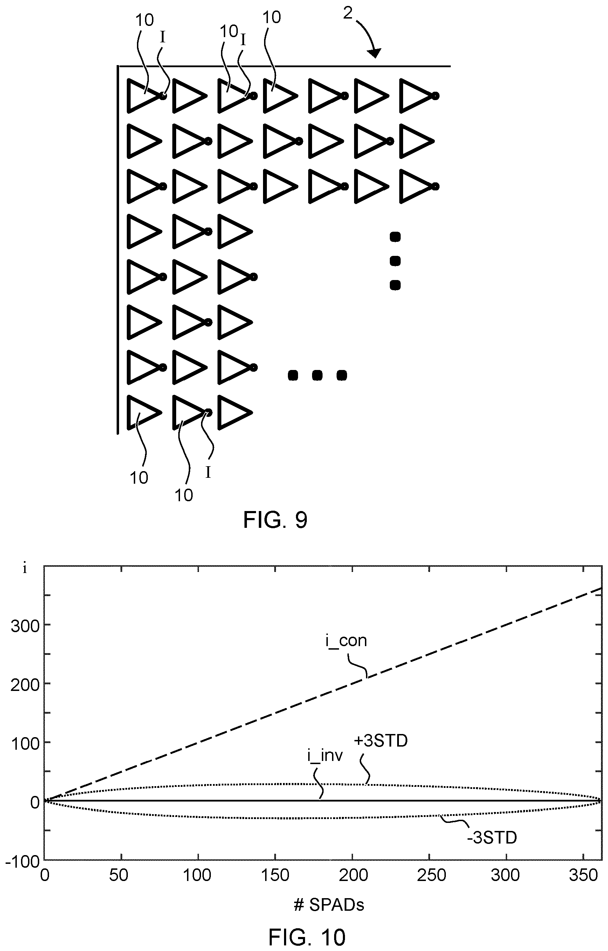

FIG. 9 shows schematically the array 2 of photon-counting detector elements 10 of an exemplary image sensor 1 of the invention.

Half of all photon-counting detector elements 10 are provided with inverters I so that the polarity at their outputs is inverted and the output signals become active-low. Within each row and each column of the array 2, photon-counting detector elements 10 with and without inverters alternate.

More generally, the photon-counting detector elements 10 with inverters I may be evenly spread between the photon-counting detector elements 10 without inverters.

In this way, for practically all realistically appearing illumination distributions, the high and low output signals will be balanced or almost balanced. For example, if an illumination spot hits only about ten neighboring photon-counting detector elements 10, the position of the illumination spot on the array 2 will not affect the desired balance in the output. Furthermore, the size of the illumination spot will not or hardly affect the balance.

Grouping the photon-counting detector elements 10 in two groups may, in one embodiment, only concern those photon-counting detector elements 10 that are not connected to a counter (such as the timing outputs 37 in FIG. 2). These photon-counting detector elements 10 may be routed via a connection matrix 31, which is in particular feasible if skew-less lines are provided between the photon-counting detector elements 10 and the connection matrix 31, as described for some embodiments of the invention. To allow for active-low outputs, the connection matrix may in this case not merely include OR connections but further logical units such that a high signal / a count signal is output if any one of the active-high and active-low photon-counting detector elements 10 outputs a signal indicative of the reception of a photon. In other embodiments, the photon-counting detector elements 10 of the two groups are not connected via a connection matrix to the output pads. The array 2 then comprises further photon-counting detector elements 10 which are connected with the connection matrix as described with regard to FIG. 2.

### FIG. 10

FIG. 10 shows a graph with simulated results of the total current balance at the chip output, for the case of an array without any inverters (i.e., all photon-counting detector elements 10 are active-high), and for the array 2 of FIG. 9 (i.e., 50% of active-low photon-counting detector elements 10 distributed evenly between the 50% of active-high photon-counting detector elements 10.

The horizontal axis in FIG. 10 indicates the number of simultaneously firing photon-counting detector elements 10. The vertical axis indicates the units of current i at the output. The curve i_con indicates the current at the output interface for a conventional sensor with only active-high SPADs. As shown, the units of current increase proportionally with the activity with no limit. For example, in a system of 362 SPADs, the units of current will increase up to 362 units.

In contrast, curve i_inv relates to a case where half of all SPADs are inverted to be active-low. The positive and negative currents will tend, with certain probabilities, to compensate one another, thus keeping a mean value of 0 units of current no matter what activity is considered. However, since all SPADs are independent and could fire in any random combination, they will not always fully compensate each other. The curves +3STD and -3STD indicate the borders within which the current will be in 95% of all theoretically possible cases. The theoretically possible cases comprise all possible illumination patterns on the sensor array, while practically possible patterns will enjoy an even better current compensation. The +3STD and -3STD boundaries indicate that the inversion of 50% of the outputs of all 362 SPADs as shown in FIG. 9 can reduce the imbalance of units of currents from 181 to 30 or less for 95% of the cases at the worst-case scenario (activity of all SPADs: 50%).

### FIGS. 11 to 13

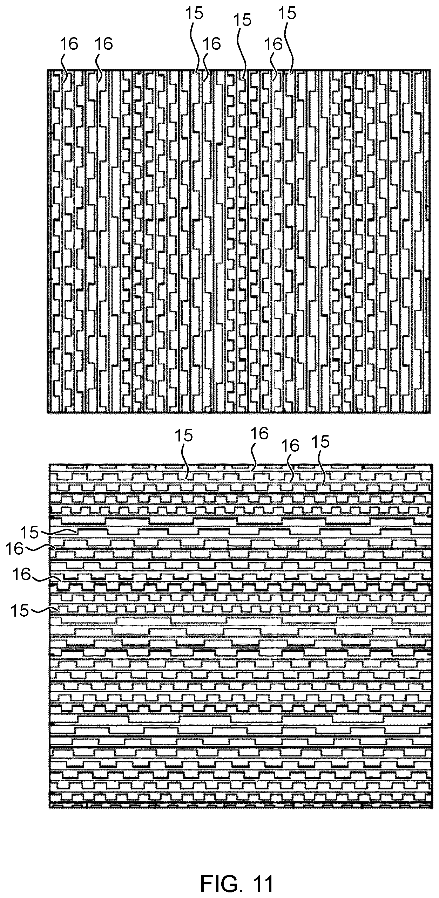

FIGS. 11 to 13 show schematically output tracks (output lines) 15 of photon-counting detector elements of exemplary embodiments of the image sensor of the invention. In conventional image sensors, different lengths (skew) of the output tracks of sensor elements lead to time jitter in the measured signals. This problem may increase when a connection matrix combines the signals from several detector elements; the information from which of several combined detector elements a signal stems is lost, and hence compensation after the connection matrix becomes more difficult or impossible.

The embodiment of FIGS. 11 to 13 minimizes the global time jitter of the system through length equalization of all output tracks 15 of the photon-counting detector elements. For this purpose, the output tracks 15 are provided with wiggles 17 which increase the length of the respective output track 15. The output tracks 15 thus are not merely straight lines but include a zig-zag, meandering or otherwise oscillating shape according to the wiggles 17.

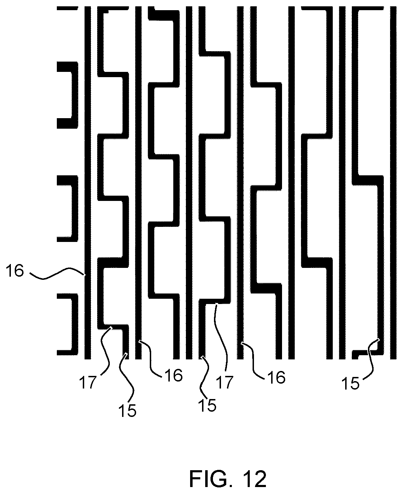

FIG. 11 shows in its upper part output tracks 15 which are vertical tracks of the sensor array, whereas the lower part of FIG. 11 shows output tracks 15 which constitute horizontal tracks of the sensor array. A detail of FIG. 11 is shown in FIG. 12.

Due to the overall geometry (outside the depicted areas), the output tracks 15 would have different lengths if no wiggles 17 were used. The wiggles 17 compensate for any skew of the SPAD array. For designing the chip, the number of wiggles 17 to be added to each output track 15 is calculated by a length equalization algorithm such that each output track 15 has the same length from the respective photon-counting detector element to a connection point (e.g., OR connection) of the connection matrix 31. In this way, also the locations of all connections of the connection matrix 31 can be considered: the output track 15 of one photon-counting detector element connects to several (OR) connectors of the connection matrix 31 to allow flexibly binning/combining photon-counting detector elements into macro-pixels. The wiggles 17 may be added such that the length of the output track 15 from its photon-counting detector element to each of its (OR) connectors of the connection matrix 31 is the same. Additionally, the wiggles 17 provide for common lengths between the output tracks 15 of different photon-counting detector elements.

FIGS. 11 to 13 additionally show that ground tracks / lines 16 are added for shielding. Between two neighboring output tracks 15, there is always one ground track 16 which reduces crosstalk between the neighboring output tracks 15. The ground tracks 16 include no wiggles as no length equalization is needed.

The wiggles 17 may be evenly spread along a length of each output track 15, i.e., the bends or turns of the wiggles 17 of one output track 15 may have a common distance from one bend/turn to the next. The more wiggles 17 are added to an output track 15, the shorter the distance between bends/turns of the wiggles 17 of this output track 15.

In the depicted example, the wiggles 17 are formed such that each output track 15 has on average the same distance to both of its neighboring ground tracks 16 for equalizing the fringe capacitance.

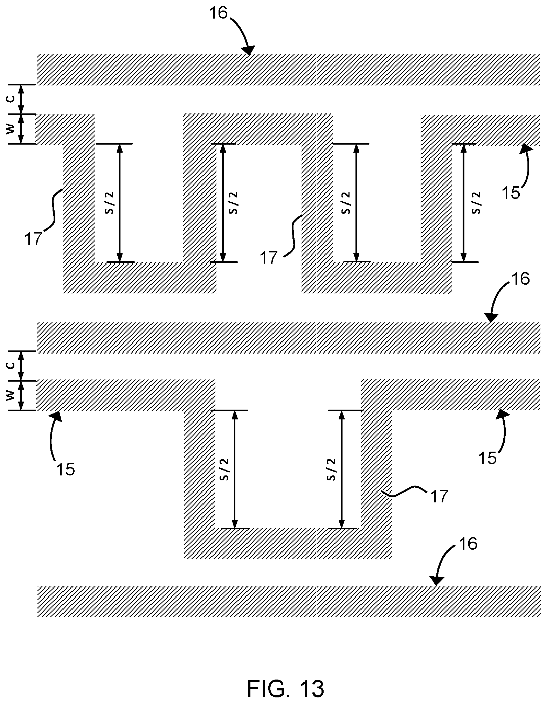

FIG. 13 shows an enlarged section of two output tracks 15 and neighboring ground tracks 16 for shielding. For illustrative purposes, the output track 15 shown in the lower part of FIG. 13 needs to be lengthened by a length S such that its total length matches the length of the longest output track 15. This is achieved by adding one wiggle 17 which comprises two lengthening sections each having a length of S/2. The output track 15 shown in the upper part of FIG. 13 is shorter still and needs to be lengthened by 2S for which reason two wiggles 17 are added.

FIG. 13 also indicates a (minimal) width W of the output tracks 15 and a minimal clearance C between the output track 15 and the neighboring ground track 16. The width W may be constant throughout the wiggles 17. While the shown embodiments depict rectangular-shaped wiggles 17, the wiggles 17 may be modified to include rounded edges or to have other forms such as a sinusoidal shape or a saw tooth shape.

In the depicted examples, the parasitics to ground are equalized in all of the output tracks 15. Equal proximity to the surrounding ground tracks 16 is ensured along the whole length of the output tracks 15. For this purpose, a minimum number of wiggles 17 may optionally also be added to the longest output track 15 which, in principle, does not need any extra length for the length compensation. In an exemplary embodiment, the compensation achieved for 362 output tracks coming from the SPAD array was 6 µm of a total length of 800 µm for the worst-case track. The time spread or jitter at Full-Width Half-Maximum (FWHM) was 15 ps in simulations.

The described length compensation by added wiggles may optionally also be used for other lines of the chip and/or for digital communication, in particular for the output lines of the counters and/or the lines from the connection matrix to the counter unit. In the exemplary embodiments of the figures, the detector elements have been described as photon-counting detector elements; however, in general the described examples may be modified such that the detector elements are not photon-counting detector elements.

The features described with regard to different figures may be combined. In particular, an image sensor may comprise the n-bit to m-bit converter described with regard to FIGS. 2 to 7 and/or the SPAD output inversion scheme described with regard to FIGS. 8 to 10 and/or the skew-less output tracks described with regard to FIGS. 11 to 13.

### List of reference signs

- 1: image sensor
- 2: SPAD array / array of photon-counting detector elements
- 5: masking register of the SPAD array
- 10: photon-counting detector elements
- 15: output tracks/lines of photon-counting detector elements 10
- 16: ground tracks (ground shield lines) for the output tracks 15
- 17: wiggles in the output tracks 15
- 18: monostables used for shortening the signal lengths of a SPAD output
- 20: chip
- 30: electronic module
- 31: connection matrix
- 32: logic OR connection of the connection matrix
- 33: RAM / memory of the connection matrix
- 34: output lines of the connection matrix 31 to counter 35
- 35: counter(s)
- 36: output lines of the connection matrix 31
- 37: timing output of the image sensor chip
- 40: n-bit output word
- 42: histogram of all possible n-bit output words
- 45: n-bit to m-bit converter / n-bit to m-bit conversion LUT
- 46: input of n-bit to m-bit conversion LUT 45
- 47: electrical lines within n-bit to m-bit conversion LUT 45
- 48: logical units of n-bit to m-bit conversion LUT 45
- 49: output of n-bit to m-bit conversion LUT 45
- 50: m-bit code (used to encode an n-bit output word)
- 51: subset of all possible m-bit codes
- 52: histogram of all possible m-bit codes
- 60: (input/)output unit
- 61: (input/)output cells of the (input/)output unit
- 62: pads of the (input/)output unit
- 63: read-out system
- 64: frame
- 65: interface between the chip and the external system
- 66: pins through which the external system connects to the chip
- 75: clock signal
- 76: serial input data
- 77: digital interface
- 78: registers
- 80: external (electronic) system
- 85: m-bit to n-bit reverse converter / LUT
- 100: SPAD sensor device
- A: signal to be transmitted from voltage domain VD1 to VD2
- B: buffers of photon-counting detector elements
- C: minimal clearance between an output track 15 and a neighboring ground track 16
- G1: first group of photon-counting detector elements
- G2: second group of photon-counting detector elements
- H: active-high
- H_{n-bit}: histogram of transitions when outputting regular 9-bit words
- H_{m-bit_subset}: histogram of transitions when outputting 11-bit codes of the subset which encode all possible 9-bit words
- I: inverters of photon-counting detector elements
- i_con: total current at the chip output if all SPADs are active-high
- i_inv: total current (average) at the chip output if one half of all SPADs is active-high and one half is active-low
- +3STD / -3STD: curves showing the current boundaries within which the current is for 95% of all theoretical scenarios
- L: active-low
- L₁ - L₄: inductors at the interface between voltage domains VD1, VD2
- MP₁, MP₂: PMOS transistors
- MN₁, MN₂: NMOS transistors
- SEP: line representing the separation of voltage domains VD1 and VD2
- VD1, VD2: different voltage domains for single-ended digital communication
- W: width of an output track 15
- Z: output signal at voltage domain VD2

## Claims

1. An image sensor including:
detector elements (10); and
an electronic module (30) configured to output n-bit output words (40) which include measurement data from the detector elements (10);
**characterized in that**
the image sensor further comprises an n-bit to m-bit converter (45), which converts each of the n-bit output words (40) to an m-bit code (50), where m is larger than n;
the image sensor further comprises an output unit (60) configured for single-ended communication and configured to output the m-bit code (50) in parallel;
wherein the n-bit to m-bit converter (45) uses only a subset (51) of all possible m-bit codes (50) to encode the n-bit output words (40), wherein the subset (51) is chosen such that a difference between a number of zeros and ones of each m-bit code (50) in the subset (51) is on average smaller than an average difference between a number of zeros and ones of all possible n-bit output words (40).

2. The image sensor according to claim 1,
wherein the subset (51) is chosen such that an average difference (d1) in the number of ones between two randomly drawn m-bit codes (50) of the subset (51) is smaller than an average difference (d0) in the number of ones between two randomly drawn n-bit output words (40).

3. The image sensor according to claim 1 or 2,
wherein the output unit (60) comprises a bus including a number of at least m pads (62), wherein each pad (62) outputs one bit of the m-bit code (50).

4. The image sensor according to any one of the preceding claims,
wherein the n-bit to m-bit converter (45) is built with m being larger than n by 2 or 3;
wherein those m-bit codes (50) which have a highest difference between their numbers of 1s and 0s are not included in the subset (51).

5. The image sensor according to any one of the preceding claims,
wherein the number of m-bit codes (50) included in the subset (51) is 2^n,
wherein out of all possible m-bit codes (50), those 2^n different m-bit codes (50) are chosen for the subset (51) which have a smallest difference in their numbers of 1s and 0s.

6. The image sensor according to any one of the preceding claims,
wherein the number of m-bit codes (50) included in the subset (51) is equal to the number of all possible n-bit output words (40);
wherein m-bit codes (50) with only 1s or only 0s are excluded from the subset (51);
wherein m-bit codes (50) with only one 1 or only one 0 are excluded from the subset (51) if a remaining number of m-bit codes (50) is still sufficient to encode all possible n-bit output words (40);
wherein m-bit codes (50) with only two 1s or only two 0s are excluded from the subset (51) if a remaining number of m-bit codes (50) is still sufficient to encode all possible n-bit output words (40).

7. The image sensor according to any one of the preceding claims,
wherein a parity bit is added to the m-bit codes (50); wherein the parity bit is set to 0 for those m-bit codes (50) of the subset (51) which include the highest number of 1s.

8. The image sensor according to any one of the preceding claims,
each detector element (10) is connected to an output track (15) which forwards an output of the respective detector element (10);
wherein at least some of the output tracks (15) form wiggles (17) to increase a length of the respective output tracks (15), wherein a number of wiggles (17) per output track (15) is chosen such that all of the output tracks (15) have a common length;
wherein ground shield lines (16) are arranged between the output tracks (15) of the detector elements (10) to reduce a coupling effect between the output tracks (15).

9. The image sensor according to any one of the preceding claims,
wherein the electronic module (30) includes a connection matrix (31) configured to flexibly combine the outputs of any of the detector elements (10) into a combined signal, thus grouping the detector elements (10) into macro-pixels;
wherein the connection matrix (31) is configured to flexibly change which outputs are combined at run-time;
wherein the wiggles (17) are chosen such that the output tracks (15) have a common length to the connection matrix (31).

10. The image sensor according to any one of the preceding claims,
wherein some of the detector elements (10) are photon-counting detector elements belonging to a first group (G1), wherein outputs of the photon-counting detector elements of the first group (G1) are active-high (H), wherein the photon-counting detector elements of the first group (G1) are connected with output cells which change to a high state when the photon-counting detector elements (10) of the first group (G1) detect photons;
wherein others of the detector elements (10) are photon-counting detector elements belonging to a second group (G2), wherein outputs of the photon-counting detectors of the second group (G2) are inverted to be active-low (L), wherein the photon-counting detector elements of the second group (G2) are connected with output cells which change to a low state if the photon-counting detector elements (10) of the second group (G2) detect photons.

11. The image sensor according to the immediately preceding claim,
wherein the photon-counting detector elements that are active-high (H) and the photon-counting detector elements that are active-low (L) are arranged in an alternating manner.

12. A SPAD sensor device including an image sensor as defined in one of the preceding claims, wherein the image sensor is a SPAD sensor formed as a system on a chip (20);
wherein the SPAD sensor device further includes an external electronic system (80) which is not part of said chip (20), wherein the external electronic system (80) includes an m-bit to n-bit reverse converter (85) which is arranged to receive any m-bit codes (50) output by the output unit (60), wherein the m-bit to n-bit reverse converter (85) is configured to convert the m-bit codes (50) back to n-bit output words (40).

13. A method of producing an image sensor,
the image sensor including detector elements (10) and an electronic module (30) configured to output n-bit output words (40) which include measurement data from the detector elements (10);
**characterized by**
providing the image sensor with an n-bit to m-bit converter (45) which converts each of the n-bit output words (40) to an m-bit code (50), where m is larger than n;
providing the image sensor with an output unit (60) configured for outputting the m-bit code (50) in parallel by single-ended communication:
wherein the n-bit to m-bit converter (45) uses only a subset (51) of all possible m-bit codes (50) to encode the n-bit output words (40), wherein the subset (51) is chosen such that a difference between a number of zeros and ones of each m-bit code (50) in the subset (51) is on average smaller than an average difference between a number of zeros and ones of all possible n-bit output words (40).

14. The method according to the immediate preceding claim, the method further comprising:
defining a mapping between the n-bit output words (40) and the m-bit codes (50) through at least the following processes:
- process A: providing a group of balanced codes out of all possible m-bit codes (50), wherein the group of balanced codes includes at least 2^n different codes, and wherein the group of balanced codes is chosen such that an average difference between 0s and 1s of codes included in the group of balanced codes is smaller than an average difference between 0s and 1s of all possible m-bit codes (50);
- process B: for each of the n-bit output words (40), the group of balanced codes is searched for an m-bit code (50) that includes the bit sequence of the n-bit output word (40); if such an m-bit code (50) is found, the n-bit output word (40) is mapped to this m-bit code (50); if such an m-bit code (50) is not found:
- process C: the group of balanced codes is searched for an m-bit code (50) for which as few as possible 1/0 swaps are needed so that the bit sequence of this m-bit code (50) includes the bit sequence of the n-bit output word (40), and if an m-bit code (50) is found in this search, the n-bit output word (40) is mapped to this m-bit code (50);
constructing the n-bit to m-bit converter (45) to perform said mapping.

15. The method according to the immediate preceding claim, further comprising:
performing the search of process C until a predetermined maximum number of 1/0 swaps is reached; and if no m-bit code (50) is found in the search of process C, then:
process D: mapping the n-bit output word (40) to an m-bit code (50) which is chosen randomly or according to a predefined order out of the group of balanced codes;
wherein process D is only performed after process B has been performed for all n-bit output words (40) and after process C has been performed for all n-bit output words (40) for which no mapping has been set in process B.

## Patentansprüche

1. Ein Bildsensor mit:
Detektorelementen (10); und
einem Elektronikmodul (30) zur Ausgabe von n-Bit-Ausgabewörtern (40), die Messdaten der Detektorelemente (10) enthalten;
**dadurch gekennzeichnet, dass**
der Bildsensor ferner einen n-Bit-zu-m-Bit-Konverter (45) umfasst, der jedes der n-Bit-Ausgabewörter (40) in einen m-Bit-Code (50) umwandelt, wobei m größer als n ist;
der Bildsensor ferner eine Ausgabeeinheit (60) umfasst, die für eine unsymmetrische Kommunikation konfiguriert ist und den m-Bit-Code (50) parallel ausgibt;
wobei der n-Bit-zu-m-Bit-Konverter (45) nur eine Teilmenge (51) aller möglichen m-Bit-Codes (50) zur Codierung der n-Bit-Ausgabewörter (40) verwendet, wobei die Teilmenge (51) so gewählt wird, dass eine Differenz zwischen einer Anzahl an Nullen und Einsen eines jeweiligen m-Bit-Codes (50) in der Teilmenge (51) im Durchschnitt kleiner ist als eine durchschnittliche Differenz zwischen einer Anzahl an Nullen und Einsen aller möglichen n-Bit-Ausgabewörter (40).

2. Der Bildsensor nach Anspruch 1,
wobei die Teilmenge (51) so gewählt ist, dass eine durchschnittliche Differenz (d1) der Anzahl an Einsen zwischen zwei zufällig ausgewählten m-Bit-Codes (50) der Teilmenge (51) kleiner ist als eine durchschnittliche Differenz (d0) der Anzahl an Einsen zwischen zwei zufällig ausgewählten n-Bit-Ausgabewörtern (40).

3. Der Bildsensor nach Anspruch 1 oder 2,
wobei die Ausgabeeinheit (60) einen Bus mit mindestens m Pads (62) umfasst, wobei jedes Pad (62) ein Bit des m-Bit-Codes (50) ausgibt.

4. Der Bildsensor nach einem der vorhergehenden Ansprüche,
wobei der n-Bit-zu-m-Bit-Konverter (45) so aufgebaut ist, dass m um einen Faktor 2 oder 3 größer als n ist;
wobei diejenigen m-Bit-Codes (50), die eine größte Differenz zwischen ihrer Anzahl an Einsen und Nullen haben, nicht in der Teilmenge (51) enthalten sind.

5. Der Bildsensor nach einem der vorhergehenden Ansprüche,
wobei die Anzahl der in der Teilmenge (51) enthaltenen m-Bit-Codes (50) 2^n beträgt,
wobei aus allen möglichen m-Bit-Codes (50) diejenigen 2^n verschiedenen m-Bit-Codes (50) für die Teilmenge (51) ausgewählt werden, die eine geringste Differenz in der Anzahl ihrer Einsen und Nullen aufweisen.

6. Der Bildsensor nach einem der vorhergehenden Ansprüche,
wobei die Anzahl der in der Teilmenge (51) enthaltenen m-Bit-Codes (50) gleich der Anzahl aller möglichen n-Bit-Ausgabewörter (40) ist;
wobei m-Bit-Codes (50), die nur Einsen oder nur Nullen enthalten, von der Teilmenge (51) ausgeschlossen werden;
wobei m-Bit-Codes (50) mit nur einer 1 oder nur einer 0 aus der Teilmenge (51) ausgeschlossen werden, wenn die verbleibende Anzahl von m-Bit-Codes (50) noch ausreicht, um alle möglichen n-Bit-Ausgabewörter (40) zu kodieren;
wobei m-Bit-Codes (50) mit nur zwei 1en oder nur zwei 0en aus der Teilmenge (51) ausgeschlossen werden, wenn die verbleibende Anzahl von m-Bit-Codes (50) noch ausreicht, um alle möglichen n-Bit-Ausgabewörter (40) zu kodieren.

7. Der Bildsensor nach einem der vorhergehenden Ansprüche,
wobei den m-Bit-Codes (50) ein Paritätsbit hinzugefügt wird; wobei das Paritätsbit für diejenigen m-Bit-Codes (50) der Teilmenge (51) auf 0 gesetzt wird, die die höchste Anzahl von 1en enthalten.

8. Der Bildsensor nach einem der vorhergehenden Ansprüche,
wobei jedes Detektorelement (10) mit einer Ausgangsspur (15) verbunden ist, die eine Ausgabe des jeweiligen Detektorelements (10) weiterleitet;
wobei mindestens einige der Ausgangsspuren (15) Mäander (17) bilden, um eine Länge der jeweiligen Ausgangsspuren (15) zu vergrößern, wobei eine Anzahl der Mäander (17) pro Ausgangsspur (15) so gewählt ist, dass alle der Ausgangsspuren (15) eine gleiche Länge aufweisen;
wobei zwischen den Ausgangsspuren (15) der Detektorelemente (10) Erdungsschirmleitungen (16) angeordnet sind, um einen Kopplungseffekt zwischen den Ausgangsspuren (15) zu reduzieren.

9. Der Bildsensor nach einem der vorhergehenden Ansprüche,
wobei das Elektronikmodul (30) eine Verbindungsmatrix (31) umfasst, die so konfiguriert ist, dass sie die Ausgaben beliebiger der Detektorelemente (10) flexibel zu einem kombinierten Signal zusammenführt und die Detektorelemente (10) so zu Makropixeln gruppiert;
wobei die Verbindungsmatrix (31) dazu konfiguriert ist, bei laufendem Betrieb flexibel zu ändern, welche Ausgaben kombiniert werden;
wobei die Mäander (17) so gewählt sind, dass die Ausgabespuren (15) eine gleiche Länge zu der Verbindungsmatrix (31) haben.

10. Der Bildsensor nach einem der vorhergehenden Ansprüche,
wobei einige der Detektorelemente (10) photonenzählende Detektorelemente einer ersten Gruppe (G1) sind, wobei Ausgaben der photonenzählenden Detektorelemente der ersten Gruppe (G1) aktiv-hoch (H) sind, wobei die Photonenzähl-Detektorelemente der ersten Gruppe (G1) mit Ausgabezellen verbunden sind, die auf einen hohen Zustand wechseln, wenn die photonenzählenden Detektorelemente (10) der ersten Gruppe (G1) Photonen detektieren;
wobei andere der Detektorelemente (10) photonenzählende Detektorelemente einer zweiten Gruppe (G2) sind, wobei Ausgaben der photonenzählenden Detektorelemente der zweiten Gruppe (G2) invertiert sind, um aktiv-niedrig (L) zu sein, wobei die photonenzählenden Detektorelemente der zweiten Gruppe (G2) mit Ausgabezellen verbunden sind, die auf einen niedrigen Zustand wechseln, wenn die photonenzählenden Detektorelemente (10) der zweiten Gruppe (G2) Photonen detektieren.

11. Der Bildsensor nach dem unmittelbar vorhergehenden Anspruch,
wobei die photonenzählenden Detektorelemente, die aktiv-hoch (H) sind, und die photonenzählenden Detektorelemente, die aktiv-niedrig (L) sind, abwechselnd angeordnet sind.

12. Eine SPAD-Sensorvorrichtung mit einem Bildsensor nach einem der vorhergehenden Ansprüche, wobei der Bildsensor ein als System-on-a-Chip (20) ausgebildeter SPAD-Sensor ist;
wobei die SPAD-Sensorvorrichtung ferner ein externes elektronisches System (80) umfasst, das nicht Teil des Chips (20) ist, wobei das externe elektronische System (80) einen m-Bit-zu-n-Bit-Rückwandler (85) umfasst, der so ausgelegt ist, dass er beliebige von der Ausgabeeinheit (60) ausgegebene m-Bit-Codes (50) empfängt, wobei der m-Bit-zu-n-Bit-Rückwandler (85) so konfiguriert ist, dass er die m-Bit-Codes (50) wieder in n-Bit-Ausgabewörter (40) umwandelt.

13. Ein Verfahren zur Herstellung eines Bildsensors,
wobei der Bildsensor Detektorelemente (10) und ein Elektronikmodul (30) umfasst, das zur Ausgabe von n-Bit-Ausgabewörtern (40) konfiguriert ist, die Messdaten von den Detektorelementen (10) enthalten;
**gekennzeichnet durch**:
Bereitstellen eines n-Bit-zu-m-Bit-Konverters (45) für den Bildsensor, der jedes der n-Bit-Ausgabewörter (40) in einen m-Bit-Code (50) umwandelt, wobei m größer als n ist;
Bereitstellen einer Ausgabeeinheit (60) für den Bildsensor, die zum parallelen Ausgeben des m-Bit-Codes (50) mittels unsymmetrischer Kommunikation konfiguriert ist;
wobei der n-Bit-zu-m-Bit-Konverter (45) nur eine Teilmenge (51) aller möglichen m-Bit-Codes (50) zur Codierung der n-Bit-Ausgabewörter (40) verwendet, wobei die Teilmenge (51) so gewählt ist, dass eine Differenz zwischen einer Anzahl an Nullen und Einsen eines jeweiligen m-Bit-Codes (50) in der Teilmenge (51) im Durchschnitt kleiner ist als eine durchschnittliche Differenz zwischen einer Anzahl an Nullen und Einsen aller möglichen n-Bit-Ausgabewörter (40).

14. Das Verfahren nach dem unmittelbar vorhergehenden Anspruch, wobei das Verfahren ferner Folgendes umfasst:
Definieren einer Zuordnung zwischen den n-Bit-Ausgabewörtern (40) und den m-Bit-Codes (50) durch mindestens die folgenden Prozesse:
- Prozess A: Bereitstellen einer Gruppe von ausgeglichenen Codes aus allen möglichen m-Bit-Codes (50), wobei die Gruppe von ausgeglichenen Codes mindestens 2^n verschiedene Codes enthält und die Gruppe von ausgeglichenen Codes so gewählt wird, dass eine durchschnittliche Differenz zwischen 0en und 1en von Codes, die in der Gruppe von ausgeglichenen Codes enthalten sind, kleiner ist als eine durchschnittliche Differenz zwischen 0en und 1en aller möglichen m-Bit-Codes (50);
- Prozess B: für jedes der n-Bit-Ausgabewörter (40) wird die Gruppe von ausgeglichenen Codes nach einem m-Bit-Code (50) durchsucht, der die Bitfolge des n-Bit-Ausgabeworts (40) enthält; falls ein solcher m-Bit-Code (50) gefunden wird, wird das n-Bit-Ausgabewort (40) diesem m-Bit-Code (50) zugeordnet; falls kein solcher m-Bit-Code (50) gefunden wird:
- Prozess C: die Gruppe von ausgeglichenen Codes wird nach einem m-Bit-Code (50) durchsucht, für den möglichst wenige 1/0-Vertauschungen erforderlich sind, sodass die Bitfolge dieses m-Bit-Codes (50) die Bitfolge des n-Bit-Ausgabeworts (40) enthält; und wenn bei dieser Suche ein m-Bit-Code (50) gefunden wird, dann wird das n-Bit-Ausgabewort (40) diesem m-Bit-Code (50) zugeordnet;
Konstruieren des n-Bit-zu-m-Bit-Konverters (45) so, dass er diese Zuordnung durchführt.

15. Das Verfahren nach dem unmittelbar vorhergehenden Anspruch, ferner umfassend:
Durchführen der Suche in Prozess C, bis eine vorbestimmte maximale Anzahl von 1/0-Vertauschungen erreicht ist; und falls bei der Suche aus Prozess C kein m-Bit-Code (50) gefunden wird, dann:
Prozess D: Zuordnen des n-Bit-Ausgabeworts (40) zu einem m-Bit-Code (50), der zufällig oder gemäß einer vordefinierten Reihenfolge aus der Gruppe von ausgeglichenen Codes ausgewählt wird;
wobei Prozess D erst ausgeführt wird, nachdem Prozess B für alle n-Bit-Ausgabewörter (40) ausgeführt wurde und Prozess C für alle n-Bit-Ausgabewörter (40), für die in Prozess B keine Zuordnung festgelegt wurde, ausgeführt wurde.

## Revendications

1. Capteur d'image comprenant :
des éléments détecteurs (10) ; et
un module électronique (30) configuré pour produire en sortie des mots de sortie de n bits (40) comprenant des données de mesure provenant des éléments détecteurs (10) ;
**caractérisé en ce que**
ledit capteur d'image comprend en outre un convertisseur de n bits en m bits (45), qui convertit chacun des mots de sortie de n bits (40) en un code de m bits (50), où m est supérieur à n ;
ledit capteur d'image comprend en outre une unité de sortie (60) configurée pour une communication à une seule extrémité et configurée pour produire en sortie le code de m bits (50) ;
ledit convertisseur de n bits en m bits (45) utilisant uniquement un sous-ensemble (51) de tous les codes de m bits (50) possibles pour coder les mots de sortie de n bits (40), ledit sous-ensemble (51) étant choisi de telle sorte qu'une différence entre un nombre de zéros et de uns de chaque code de m bits (50) dans le sous-ensemble (51) soit en moyenne inférieure à une différence moyenne entre un nombre de zéros et de uns de tous les mots de sortie de n bits (40) possibles.

2. Capteur d'image selon la revendication 1,
dans lequel le sous-ensemble (51) est choisi de telle sorte qu'une différence moyenne (d1) dans le nombre de uns entre deux codes de m bits (50) tirés au hasard dans ledit sous-ensemble (51) soit inférieure à une différence moyenne (d0) dans le nombre de uns entre deux mots de sortie de n bits (40) tirés au hasard.

3. Capteur d'image selon la revendication 1 ou 2,
dans lequel l'unité de sortie (60) comprend un bus comprenant un nombre d'au moins m plots (62), chaque plot (62) produisant en sortie un bit du code de m bits (50).

4. Capteur d'image selon l'une quelconque des revendications précédentes,
dans lequel ledit convertisseur de n bits en m bits (45) est construit avec m étant supérieur à n de 2 ou 3 ;
les codes de m bits (50) qui présentent la différence la plus élevée entre leur nombre de uns et leur nombre de zéros n'étant pas inclus dans le sous-ensemble (51).

5. Capteur d'image selon l'une quelconque des revendications précédentes,
dans lequel le nombre de codes de m bits (50) inclus dans le sous-ensemble (51) est 2^n,
et, parmi tous les codes de m bits (50) possibles, les 2^n différents codes de m bits (50) qui présentent la plus petite différence entre leur nombre de 1 et leur nombre de 0 sont choisis pour le sous-ensemble (51).

6. Capteur d'image selon l'une quelconque des revendications précédentes,
dans lequel le nombre de codes de m bits (50) inclus dans le sous-ensemble (51) est égal au nombre de tous les mots de sortie de n bits (40) possibles ;
les codes de m bits (50) ne comportant que des 1 ou que des 0 étant exclus du sous-ensemble (51) ;
les codes de m bits (50) ne comportant qu'un seul 1 ou qu'un seul 0 étant exclus du sous-ensemble (51) si le nombre restant de codes de m bits (50) est encore suffisant pour coder tous les mots de sortie de n bits (40) possibles ;
les codes de m bits (50) ne comportant que deux 1 ou que deux 0 étant exclus du sous-ensemble (51) si le nombre restant de codes de m bits (50) est encore suffisant pour coder tous les mots de sortie de n bits (40) possibles.

7. Capteur d'image selon l'une quelconque des revendications précédentes,
dans lequel un bit de parité est ajouté aux codes de m bits (50) ;
ledit bit de parité étant défini sur 0 pour les codes de m bits (50) du sous-ensemble (51) qui comprennent le plus grand nombre de 1.

8. Capteur d'image selon l'une quelconque des revendications précédentes,
dans lequel chaque élément détecteur (10) est connecté à une voie de sortie (15) qui transmet une sortie de l'élément détecteur (10) respectif ;
au moins certaines desdites voies de sortie (15) formant des déviations (17) afin d'augmenter la longueur des voies de sortie (15) respectives, un nombre de déviations (17) par voie de sortie (15) étant choisi de telle sorte que toutes les voies de sortie (15) aient une longueur commune ;
des lignes de blindage de masse (16) étant disposées entre les voies de sortie (15) des éléments détecteurs (10) afin de réduire un effet de couplage entre les voies de sortie (15).

9. Capteur d'image selon l'une quelconque des revendications précédentes,
dans lequel le module électronique (30) comprend une matrice de connexion (31) configurée pour combiner de manière souple les sorties de n'importe lequel des éléments détecteurs (10) en un signal combiné, regroupant ainsi les éléments détecteurs (10) en macro-pixels ;
ladite matrice de connexion (31) étant configurée pour modifier de manière souple les sorties qui sont combinées au moment de l'exécution ;
lesdites déviations (17) étant choisies de telle sorte que les voies de sortie (15) aient une longueur commune à la matrice de connexion (31).

10. Capteur d'image selon l'une quelconque des revendications précédentes,
dans lequel certains des éléments détecteurs (10) sont des éléments détecteurs à comptage photonique qui appartiennent à un premier groupe (G1), les sorties desdits éléments détecteurs à comptage photonique du premier groupe (G1) étant actives à l'état haut (H), lesdits éléments détecteurs à comptage photonique du premier groupe (G1) étant connectés à des cellules de sortie qui passent à l'état haut lorsque lesdits éléments détecteurs (10) à comptage photonique du premier groupe (G1) détectent des photons ;
dans lequel d'autres éléments détecteurs (10) sont des éléments détecteurs à comptage photonique qui appartiennent à un deuxième groupe (G2), les sorties desdits détecteurs à comptage photonique du deuxième groupe (G2) étant inversées pour être actives à l'état bas (L), lesdits éléments détecteurs à comptage photonique du deuxième groupe (G2) étant connectés à des cellules de sortie qui passent à un état bas si lesdits éléments détecteurs (10) à comptage photonique du deuxième groupe (G2) détectent des photons.

11. Capteur d'image selon la revendication précédente,
dans lequel les éléments détecteurs à comptage photonique qui sont actifs à l'état haut (H) et les éléments détecteurs à comptage photonique qui sont actifs à l'état bas (L) sont disposés en alternance.

12. Dispositif capteur SPAD comprenant un capteur d'image tel que défini dans l'une des revendications précédentes, ledit capteur d'image étant un capteur SPAD formé comme un système sur une puce (20) ;
ledit dispositif de capteur SPAD comprenant en outre un système électronique externe (80) qui ne fait pas partie de ladite puce (20), ledit système électronique externe (80) comprenant un convertisseur inverse de m bits en n bits (85) qui est placé pour recevoir tous les codes de m bits (50) émis par l'unité de sortie (60), ledit convertisseur inverse de m bits en n bits (85) étant configuré pour reconvertir les codes de m bits (50) en mots de sortie de n bits (40).

13. Procédé de fabrication d'un capteur d'image,
ledit capteur d'image comprenant des éléments détecteurs (10) et un module électronique (30) configuré pour produire en sortie des mots de sortie de n bits (40) comprenant des données de mesure provenant des éléments détecteurs (10) ; **caractérisé par**
fourniture dudit capteur d'image d'un convertisseur de n bits en m bits (45) qui convertit chacun des mots de sortie de n bits (40) en un code de m bits (50), où m est supérieur à n ;
fourniture dudit capteur d'image d'une unité de sortie (60) configurée pour produire en sortie le code de m bits (50) par communication à une seule extrémité ;
ledit convertisseur de n bits en m bits (45) utilisant uniquement un sous-ensemble (51) de tous les codes de m bits (50) possibles pour coder les mots de sortie de n bits (40), ledit sous-ensemble (51) étant choisi de telle sorte que la différence entre le nombre de zéros et de uns de chaque code de m bits (50) dans le sous-ensemble (51) soit en moyenne inférieure à la différence moyenne entre le nombre de zéros et de uns de tous les mots de sortie de n bits (40) possibles.

14. Procédé selon la revendication précédente, le procédé comprenant en outre :
définition d'un mapping entre les mots de sortie de n bits (40) et les codes de m bits (50) par au moins les processus suivants :
- processus A : fourniture d'un groupe de codes équilibrés parmi tous les codes de m bits (50) possibles, ledit groupe de codes équilibrés comprenant au moins 2^n codes différents, et ledit groupe de codes équilibrés étant choisi de telle sorte qu'une différence moyenne entre les 0 et les 1 des codes inclus dans le groupe de codes équilibrés soit inférieure à une différence moyenne entre les 0 et les 1 de tous les codes m bits (50) possibles ;
- processus B : pour chacun des mots de sortie de n bits (40), le groupe de codes équilibrés est recherché pour un code de m bits (50) qui comprend la séquence de bits du mot de sortie de n bits (40) ; si un tel code de m bits (50) est trouvé, le mot de sortie de n bits (40) est mappé à ce code de m bits (50) ; si un tel code de m bits (50) n'est pas trouvé :
- processus C : le groupe de codes équilibrés est recherché pour un code de m bits (50) pour lequel le moins possible d'échanges 1/0 sont nécessaires afin que la séquence binaire dudit code de m bits (50) inclue la séquence binaire du mot de sortie de n bits (40), et si un code à m bits (50) est trouvé lors de cette recherche, le mot de sortie de n bits (40) est mappé à ce code de m bits (50) ;
construction du convertisseur de n bits en m bits (45) pour effectuer ledit mapping.

15. Procédé selon la revendication précédente, comprenant en outre : exécution de la recherche selon le processus C jusqu'à ce qu'un nombre maximal prédéterminé d'échanges 1/0 soit atteint ; et si aucun code de m bits (50) n'est trouvé dans la recherche selon le processus C, alors :
processus D : mapping du mot de sortie de n bits (40) à un code de m bits (50) qui est choisi aléatoirement ou selon un ordre prédéfini parmi le groupe de codes équilibrés ;
ledit processus D n'étant effectué qu'après que le processus B a été effectué pour tous les mots de sortie de n bits (40) et après que le processus C a été effectué pour tous les mots de sortie de n bits (40) pour lesquels aucun mapping n'a été défini dans le processus B.
